# EUROPÄISCHE PATENTSCHRIFT

(11) **EP 1 866 919 B1**
(45) Veröffentlichungstag und Bekanntmachung des Hinweises auf die Patenterteilung: **01.07.2009**
(21) Anmeldenummer: 06708264.4
(22) Anmeldetag: 14.02.2006
(51) Int. Cl.: G11B 7/26

(54) **VORRICHTUNG UND VERFAHREN ZUR HERSTELLUNG VON OPTISCHEN DATENTRÄGERN**
DEVICE AND METHOD FOR PRODUCING OPTICAL DATA MEDIA
DISPOSITIF ET PROCEDE POUR PRODUIRE DES SUPPORTS DE DONNEES OPTIQUES

(30) Priorität: 26.03.2005 DE 102005013975
(43) Veröffentlichungstag der Anmeldung: 19.12.2007
(73) Patentinhaber: Thomson Licensing SAS, 92100 Boulogne-Billancourt (FR)
(72) Erfinder: BUERKLE, Erwin, 83671 Benediktbeuern (DE); EICHLSEDER, Martin, 94167 Tettenweis (DE)
(74) Vertreter: Schmidt-Uhlig, Thomas
(86) Internationale Anmeldenummer: PCT/EP2006/050927
(87) Internationale Veröffentlichungsnummer: WO 2006/103140

(56) Entgegenhaltungen:
- EP-A- 1 102 253
- DE-A1- 19 842 899
- DE-B3- 10 309 814
- US-A- 5 008 062
- US-A1- 2004 090 893

## Beschreibung

Die vorliegende Erfindung betrifft eine Vorrichtung und ein Verfahren zur Herstellung von optischen Datenträgern gemäß den Oberbegriffen der Ansprüche 1 und 19.

Optische Datenträger zur Speicherung von Informationen sind seit den letzten Jahren nicht mehr aus dem täglichen Leben wegzudenken. In besonderer Weise haben sich CD (Compact Disc) und DVD (Digital Versatile Disc) als Massenspeicher etabliert. Im Gegensatz zu Datenspeichern mit kurzen Zugriffspeichern, die insbesondere für Arbeitspeicher von Computern und dergleichen verwendet werden, sind optische Datenträger als Massenspeicher im Einsatz, die zur Bewältigung der zunehmenden Datenflut verwendet werden.

Die Anfänge der praktischen Nutzung von optischen Datenträgern reichen bis ins Jahr 1980 zurück, in dem die sogenannte " Laserdisc" entwickelt wurde. Nachfolgend wurde schrittweise in den Jahren 1982 die Audio-CD, 1985 die CD-ROM, 1988 die MO-DISC (Magneto-Optische Disc), 1989 die CD-R, 1994/1995 die DVD, 1996 die CD-RW, DVD-Video und DVD-ROM, 1997-2002 die DVD-Audio, die DVD-R, die DVD-RAM, die DVD-RW, die DVD+RW und die DVD+R entwickelt.

Nunmehr steht ein weiterer Schritt mit der Beendigung der Entwicklung der sogenannten BluRay-Disc bevor. Die Entwicklung der BluRay-Disc wurde bereits im Jahre 2003 abgeschlossen. Den Namen hat die BluRay Disc von dem verwendeten Laser, der eine 405 nm Wellenlänge besitzt, die im blauen Bereich liegt. Zu der BluRay-Disc gibt es auch eine Alternative die sogenannte " High-Capacity" DVD, auch blaue DVD genannt.

Bei der Audio-CD konnte man gerade ca. 80 Minuten an Musikinformation mit einer Abtastfrequenz von 44,1 kHz und einer Auflösung von 16 Bit speichern. Die CD-ROM brachte es immerhin auf eine Speicherkapazität von ca. 700 MB. Bei der DVD konnte die Speicherkapazität aufgrund kleinerer Strukturen um ein Vielfaches erhöht werden. So fasst beispielsweise eine sogenannten single-side, single-layer DVD (DVD-5) etwa 4,7 GB. Eine double-side, double-layer DVD bringt es auf immerhin ca. 17 GB.

Sowohl bei der CD wie auch bei der DVD wird die gespeicherte Information in einer spiralförmigen Spur (Nut) in Form von sogenannten "pits" (Löchern) oder "grooves" (bei beschreibbaren optischen Datenträgern) und "lands" (Bodenbereich) abgespeichert. Dabei wird als "pit" ein Loch aus Sicht der reflektierenden Schicht bezeichnet. Eine "pits/grooves" und "lands" aufweisende Informationsschicht ist voll oder teilweise reflektierend ausgebildet. Dabei ist das Loch (pit) schwach reflektierend. Ein "land" wird als Fläche zwischen zwei "pits" bezeichnet und ist stark reflektierend. Ein "bump" hingegen bezeichnet einen "pit" aus Sicht des Lasers.

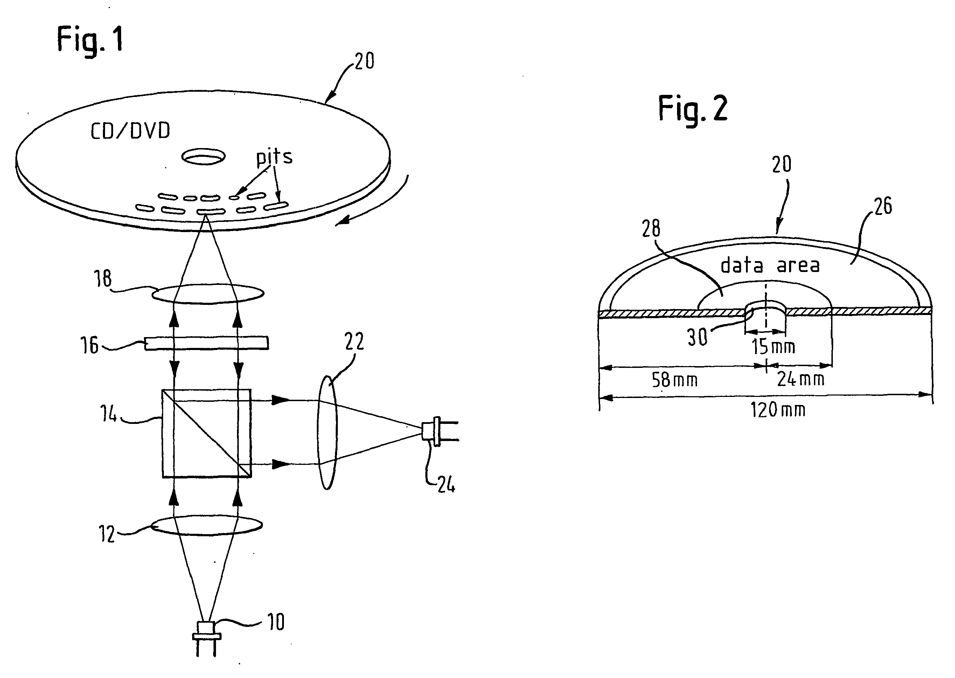

Die Arbeitsweise beim Abtasten (Lesen) der Information auf einem herkömmlichen optischen Datenträger (CD/DVD) wird mit Bezug auf Fig. 1 beschrieben. Eine Laserdiode 10 sendet Laserlicht in einer bestimmten Wellenlänge (CD: 780 nm; DVD: 650 nm; BluRay: 405nm) aus. Dieses Laserlicht wird durch eine Linse 12 auf einem Polarisationsstrahlteiler 14 gelenkt und geht durch diesen hindurch auf eine sogenannte λ /4-Platte, durch welche die Polarisation des Laserstrahl gedreht wird. Mit einer Linse 18 wird der Strahl auf die Spur eines optischen Datenträgers 20 fokussiert. Je nachdem, ob an der entsprechenden Stelle ein "pit" oder "land" vorgefunden wird, wird der Laserstrahl mehr (land) oder weniger (pit) stark reflektiert. Der reflektierte Laserstrahl wird wieder durch die Linse 18 auf die λ /4-Platte gerichtet, wo die Polarisation noch mal gedreht wird. Durch die Drehung der Polarisation verhindert der Strahlteiler 14 eine Rückkopplung auf die Laserdiode 10 und lenkt den reflektierten Laserstrahl über eine Linse 22 auf eine Fotodiode 24, die auswertet, ob der Laserstrahl zurückgespiegelt worden ist oder nicht. Entsprechend der Information auf dem optischen Datenträger 20 wird über die Fotodiode ein entsprechendes elektrisches Signal erzeugt.

Die Gesamt-Abmessungen einer herkömmlichen CD und DVD sind in der Regel identisch. Wie in Fig. 2 gezeigt ist, weisen beide optischen Datenträger 20 einen Durchmesser von 120 mm, eine Zentralbohrung 30 von 15 mm und einen ringförmigen Datenbereich 26 auf, wobei die Ringstärke etwa 34 mm beträgt. Unterschiede zwischen der CD und DVD gibt es jedoch in den technischen Daten. So ist bei einer CD der Spurabstand 1,6 µ m, die Pitbreite 0,5 µ m, die minimale Pitlänge 0,83 µ m und die maximale Pitlänge 3,05 µ m. Die Lesegeschwindigkeit beträgt bei einer CD 1,2 - 1,4 m/s.

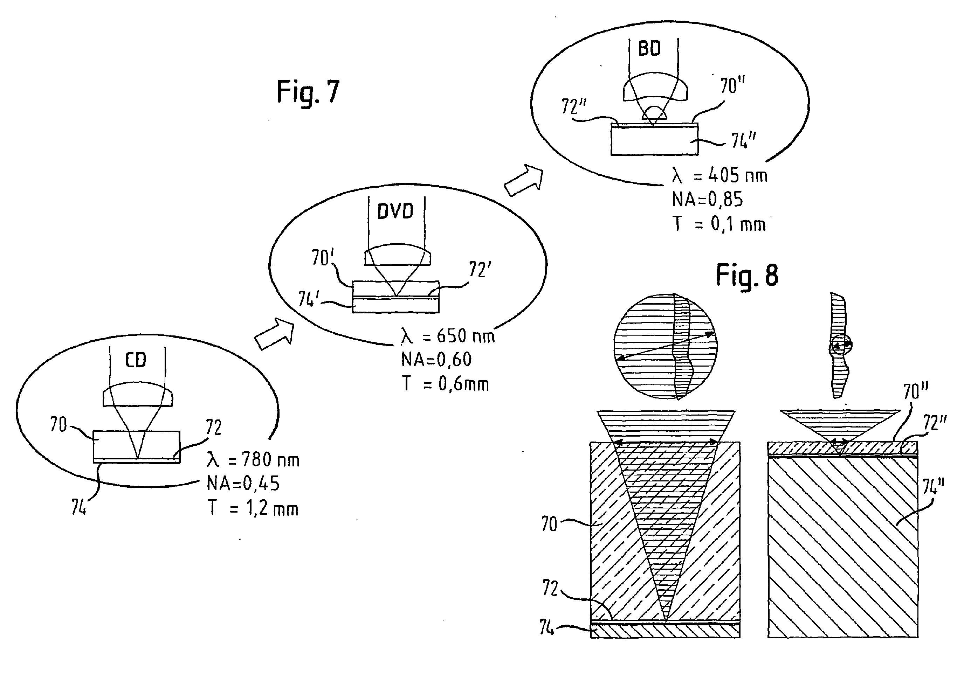

Bei einer DVD (z. B. Singlelayer, Singlesite DVD) beträgt der Spurabstand 0,74 µ m, die Pitbreite 0,32 µ m, die minimale Pitlänge 0,4 µ m und die maximale Pitlänge 1,87 µ m. Die Lesegeschwindigkeit beträgt etwa 3,49 m/s. Weitere Daten zu der Numerischen Apertur (NA) und der von dem Laser zu durchstrahlenden Dicke (T) können der Fig. 7 entnommen werden.

In Fig. 8 ist nochmals vergrößert der Unterschied im Aufbau bei einer CD (linkes Bild) und einer BluRay (BR) (rechtes Bild) dargestellt. Eine CD ist im wesentlichen aus einem Substrat 70 gebildet, an dessen Unterseite die Informationsschicht (Abfolge von "pits" und "lands" ) ausgebildet ist. Diese Seite ist mit einer reflektierenden Schicht 72 beschichtet. Abschließend ist eine dünne Schutzschicht meist in Form eines Klarlackes 74 aufgebracht. Auf diesem Klarlack 74 wird dann üblicherweise noch ein Label aufgebracht. Durchstrahlt wird die CD von oben durch das Substrat 70, welches ca. eine Dicke von 1,1 mm hat. Die numerische Apertur ist dabei 0,45. Liegt auf den Oberfläche ein Kratzer vor, so beeinflusst dieser das Lichtsignal nicht ausschlaggebend.

Bei der BluRay hingegen hat die durchstrahlte Deckschicht lediglich eine Dicke von 0,1 mm. Anschließend kommt die Reflexionsschicht 72" und darunter eine Trägerschicht 74" . Bei der BluRay wird lediglich die obere dünne Schicht von 0,1 mm durchstrahlt, wobei eine numerische Apertur von 0,85 vorliegt. Ein Kratzer in der Oberfläche kann sich hier durchaus nachteilig auf die Signalgüte auswirken.

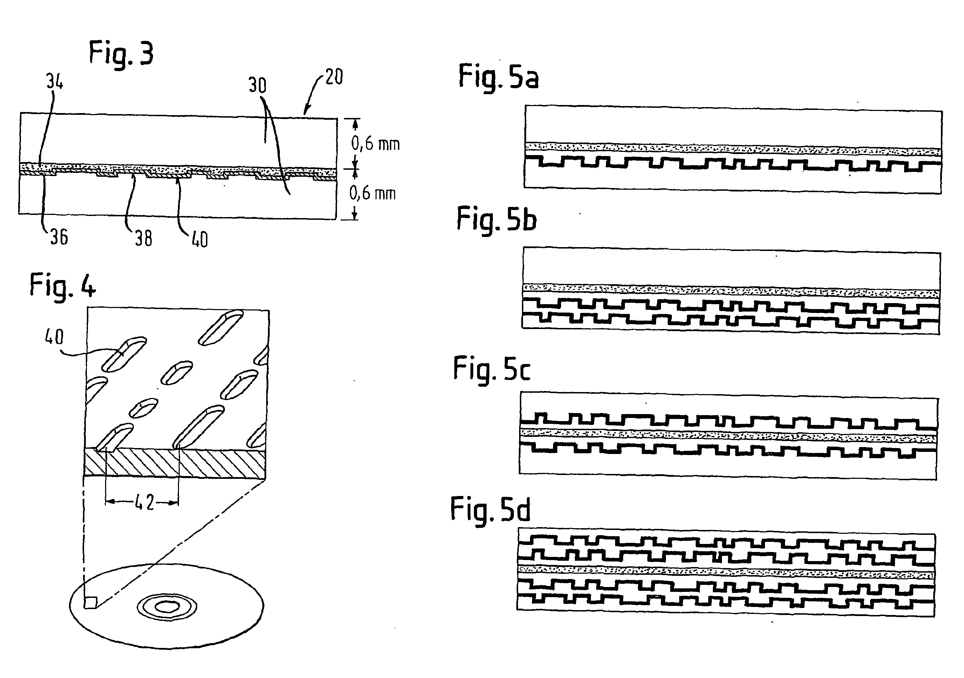

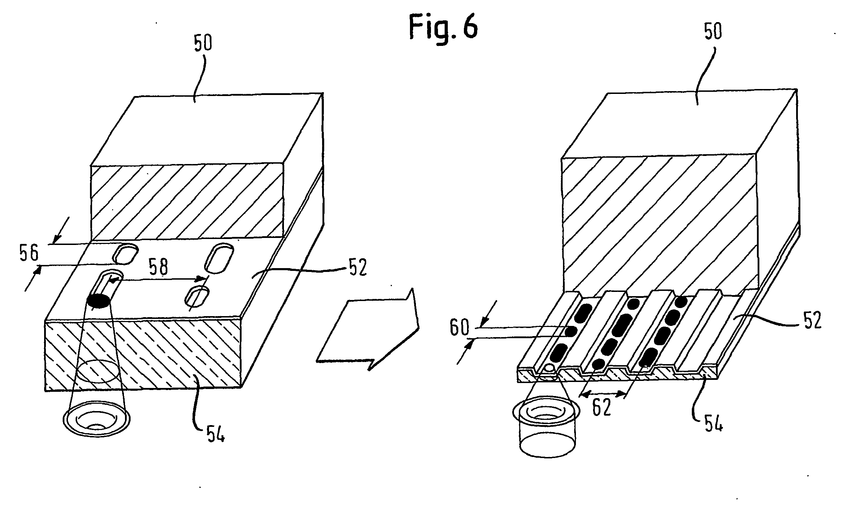

Der Unterschied zwischen einer DVD-5 und einer BluRay ist in Fig. 6 dargestellt. Beide optischen Datenträger besitzen eine Substratschicht 50, welche bei der DVD (linke Abbildung) im Bereich von 0,6 mm und bei der BluRay im Bereich von etwa 1,1 mm liegt. Anschließend folgt die Informationsschicht 52, in der die "pits" angeordnet sind. Anschließend (in Fig. 6 unten) ist eine transparente Deck- und Schutzschicht 54 vorgesehen, die bei der DVD ebenfalls im Bereich von 0,6 mm liegt, bei der BluRay jedoch nur im Bereich von 0,1 mm. Die min. pit-Länge bei der DVD mit 0,4 µ m ist mit Bezugszeichen 56, der Spurabstand von 0,74 µ m mit Bezugszeichen 58 dargestellt. Bei der BluRay ist die min. pit-Länge von 0,15 µ m mit Bezugszeichen 60, der Spurabstand von 0,32 µ m mit Bezugszeichen 62 dargestellt. Eine weitere Teilschnittdarstellung einer DVD ist in Fig. 3 zu erkennen.

Weitere Datenformate für eine DVD können den Fig. 5a bis 5d entnommen werden. Dabei handelt es sich bei der schematischen Darstellung in Fig. 5a um eine single-Layer, single-Side DVD, bei der Darstellung in Fig. 5b um eine single-Side, double-Layer DVD, bei der Darstellung in Fig. 5c um eine double-side, single-Layer DVD und bei der Darstellung in Fig. 5d um eine double-Layer, double-Side DVD. In diesem Zusammenhang bedeutet single-Side, dass die Information nur auf einer Seite der DVD aufgebracht ist und auch nur von einer Seite ausgelesen wird. Die andere Seite ist eine Dummy-Seite. Double-Side bedeutet, dass die Information auf beiden Seiten einer DVD enthalten ist und auch von beiden Seiten ausgelesen werden muss. Beim Abspielen muss die DVD zum Auslesen der Information auf der anderen Seite umgedreht werden.

Single-Layer bedeutete, dass auf einer Seite Schicht einer DVD (allg. optischen Datenträgers) eine Information vorgesehen ist. Double-Layer bedeutet, dass auf einer Seite einer DVD (allg. optischen Datenträgers) zwei Informationsschichten angeordnet sind. In diesem Fall ist die obere Informationsschicht halbtransparent ausgebildet, so dass ein darauf gerichteter Laser bei einer entsprechenden Fokussierung auf die untere Informationsschicht gerichtet werden kann und die Information auch von dort auslesen kann.

CDs wurden bisher in der Regel mit einem Spritzgieß- oder Spritzprägeprozess hergestellt. Dabei wird zunächst in einer Kavität eines Formwerkzeugs einer Spritzgießmaschine eine Matrize angeordnet war, auf der die auf die CD zu übertragenden Informationen bereits aufgebracht sind. Beim Einspritzen von Kunststoffmaterial in die Kavität prägen sich die Strukturen der Matrize auf dem CD-Rohling ab, wodurch die Information von der Matrize auf das Kunststoffmaterial übertragen wird. Anschließend wird die mit der Struktur/Information versehene Seite mit einer reflektierenden Schicht beschichtet und in einem weiteren Schritt lackiert. Aufgrund der Dicke des Substrat-Kunststoffteils im Bereich von 1,1 mm bei einer CD und den Pit-Strukturen war eine Abformung in einem Spritzgießprozess ohne weiteres möglich. Die entsprechenden Fertigungs-Anlagen laufen seit vielen Jahren auch problemlos.

Größere Probleme haben sich dann bereits bei der Herstellung einer DVD ergeben, da die Pitabmessungen kleiner sind. Überdies musste die mit dem Laser zu durchstrahlende Deckschicht dünner gewählt werden. Dies hängt insbesondere mit der Wahl der Wellenlänge des Laserlichts und der numerischen Apertur zusammen. Wurde bei einer CD üblicherweise ein Infrarot-Laser mit einer Wellenlänge von 780 nm verwendet, so verwendet man bei einer DVD eine Wellenlänge ca. 635 bis 650 nm. Dies hatte zur Konsequenz, dass bei einer letztendlichen Dicke des optischen Daten-trägers wiederum im Bereich von 1,2 mm zwei Teilscheiben mit jeweils einer Dicke von ungefähr 0,6 mm hergestellt werden mussten, die dann miteinander zu verkleben waren (vgl. auch EP 1 102 253 und US 2004/0090893 A1).
Bereits bei der Herstellung der relativ dünnen Scheiben von 0,6 mm ergaben sich Fertigungsprobleme beispielsweise auch dadurch, dass teilweise die Pitgeometrien mit dem auch im Schmelzezustand in relativ hoch viskoser Form vorliegenden thermoplastischen Kunststoffmaterial nicht mehr mit der erforderlichen Genauigkeit abgebildet werden konnten. Zudem hat sich der Klebeprozess als störanfällig herausgestellt. Während der ersten Jahre der DVD-Herstellung mussten bis zu 50 % der DVDs als Ausschussware ausgesondert werden, da sich in der Kleberschicht immer wieder Bläschen befunden haben. Auch heute liegt die Ausschussrate von DVD' s zum Teil noch im Bereich von 15-20 %.

Zudem haben sich Schwierigkeiten beim Aufbringen der Reflexionsschicht bzw. der teilreflektierenden Schicht ergeben. Die Spiegelschicht sollte natürlich die darunter liegende Pit-Land-Struktur identisch wiedergeben. Je nach Beschichtungsvorgang (z. B. beim sogenannten Sputtern) haben sich jedoch Beschichtungsstrukturen ergeben, welche eine darunter liegende Pit-Land-Struktur nicht mehr identisch abbildeten.

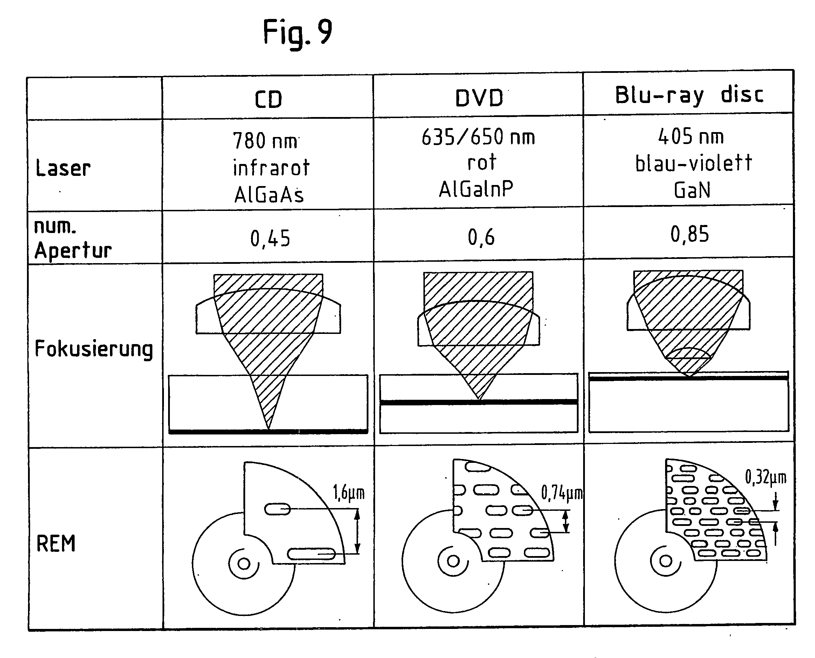

Die vorgenannten Ausführungen sollten das Verständnis für die Probleme wecken, welches nunmehr bei der Herstellung der BluRay Discs auftreten. Bei diesem neuen optischen Speichermedium darf die zu durchstrahlende transparente Deckschicht nur noch im Bereich von 0,1 mm liegen. Zudem hat sich der Spurabstand - wie oben geschildert - auf 0,32 µ m und die minimale Pitlänge auf eine Größenordnung im Bereich von 0,16-0,138 µ m reduziert. In den Figuren 7 bis 9 sind diese Unterschiede bereits erläutert worden. Eine Schichtdicke von 0,1 mm ist mit einem Spritzgießvorgang an sich kaum mehr herstellbar. Aus diesem Grunde wurde erste Versuchen mit dem Auftrag einer Deckschicht im Spin-Coating Verfahren durchgeführt.
Dabei wird eine Deckschichtmenge aufgetragen und der Datenträger schnell gedreht, wodurch sich die Deckschichtmenge durch die Zentrifugalkraft gleichmäßig nach außen verteilt. Allerdings hat sich herausgestellt, dass die Schichtdicke zum einen nicht absolut gleichmäßig ist. Zum anderen kann die Schichtdicke von genau 0,1 mm nicht absolut genau erreicht werden. Weitere Versuche wurden mit aufklebbaren Folien durchgeführt. Doch auch diese Versuche führten zu keinem zufriedenstellenden Ergebnis.

Aufgabe der vorliegenden Erfindung ist es daher, eine Vorrichtung und ein Verfahren anzugeben, mit der bzw. mit dem nicht nur herkömmliche sondern auch zukünftige optische Datenträger, insbesondere optische Datenträger mit dünnen Schichten und feinen Strukturen, sehr genau und problemlos hergestellt werden können. Überdies ist es Aufgabe der vorliegenden Erfindung entsprechende optische Datenträger anzugeben.

Diese Aufgabe wird durch die in den Ansprüchen 1 und 19 nannten Merkmale verfahrens- bzw. vorrichtungstechnisch gelöst.

Bei der herkömmlichen Herstellung werden die Substrate bzw. Informationsschichten zumeist aus Polycarbonat spritzgegossen. Polycarbonat ist dabei ein transparentes Thermoplastmaterial, welches zunächst in einer Plastifiziereinrichtung einer Spritzgießmaschine aufgeschmolzen und dann in Schmelzeform in die Kavität eingebracht wird. Bereits bei der Herstellung der DVDs, in besonderem Maße jedoch bei der Herstellung der BluRay-Disc, sind jedoch Schichtdicken der Informationsschichten verlangt, die aufgrund der auch im Schmelzezustand relativ hohen Viskosität des Polycarbonats nicht mehr ohne weiteres realisiert werden können. Zugleich wird beim Spritzgießprozess in der wichtigen Abformphase das formgebende Polycarbonat bereits abgekühlt und somit die Viskosität für den Abformprozess negativ beeinflusst.

Die Erfinder sind auf der Suche nach Lösungen zur Herstellung von modernen optischen Datenträgern mit dünnen Schichten auf eine sehr vielversprechende Anwendung aus einem anderen Technikbereich gestoßen, so ist es beispielsweise möglich, Einlageteile in einer Kavität mit Polyurethan bzw. einem Klarlack zu Überfluten. In diesem Zusammenhang verweisen wir auf die DE 196 50 854 sowie die DE 103 09 814.

Mit ein Kerngedanke der vorliegenden Erfindung ist es, durch Fluten einer geschlossenen Kavität oder durch Überfluten einer in einer geschlossenen Kavität angeordneten Teils eine genau definierte Schichtdicke für eine Schicht eines optischen Datenträgers herzustellen, wodurch auch eine besonders präzise Fertigung der geforderten dünnen Informationsschichten inklusive der genauen Abprägung der Pitstruktur gewährleistet ist. Als Material für das Fluten oder Überfluten eignet sich jedes Material, welches beim Einfüllen in einem Schmelze- oder Flüssigzustand mit relativ niedriger Viskosität vorliegt, wobei das Material nach dem Einfüllen vernetzen oder aushärten kann und nach dem Vernetzen/Aushärten entweder eine transparente oder eine voll oder teilweise reflektierende Form annimmt. Insbesondere eignen sich dafür Polyurethan-Materialien, Klarlacke (auch UV aushärtbare Klarlacke) oder Acryllacke. Auch lösungsmittelhaltige Materialien sind denkbar. Relativ niedrige Viskosität in diesem Sinne bedeutet eine Viskosität, die deutlich unter der Viskosität von aufgeschmolzenem Polycarbonat liegt und sich eignet, einen entsprechend dünnen Spalt (z.B. von 0,1 mm Dicke) - evtl. unter Anwendung eines bestimmten Druckes - ohne weiteres zu füllen.

Bedient man sich bei der Technik des Flutens oder Überflutens einer Kavität, so ergibt sich eine Vielzahl von Möglichkeiten für verschiedene Herstellverfahren oder für verschiedene Formate von optischen Datenträgern. Der Vorteil eines aushärtbaren, vorzugsweise optisch durchlässigen Flutungsmaterial liegt nicht nur in der Möglichkeit, dünne Schichten herstellen, sondern auch die kleineren Strukturen (pits) genau abformen zu können. Damit können durch Anwenden der Erfindung Probleme ausgeräumt werden, die sich bei bisherigen Verwendung des thermoplastischen Polycarbonatmaterial ergeben haben.

Mit der Technik der Herstellung von dünnen Schichten mittels des Fluten oder Überflutens lassen aber nicht nur besonders dünne Schichten herstellen. Es ist darüber hinaus auch möglich, dass für die Überflutung zu verwendende Material mit Reflexionskörpern zu versehen, so dass man auf diese Art und Weise eine vollständig oder teilweise reflektierende dünne Schicht realisieren kann. Damit kann man sich möglicherweise den separaten Schritt der Aufbringung einer Reflexionsschicht durch separate Beschichtung sparen. Auch die Verwendung von farbigen Materialien, wie mit Farbpigmenten versetzte Materialien, ist vorstellbar, auch solche Materialien besitzen nach dem Aushärten eine bestimmten optische Durchlässigkeit oder Reflexionseigenschaft.

Ein weiterer Vorteil kann darin gesehen werden, dass man den Zwischenraum zum Fluten auch zwischen zwei miteinander zu verbindenden Teile ausbilden kann. Hierzu werden zwei Teile für einen zu fertigenden optischen Datenträger in eine Werkzeugform eingebracht und darin so angeordnet, dass nach dem Schließen der Werkzeugform ein Spalt mit genau definierter Dicke zwischen den beiden Teilen bestehen bleibt. In diesen Spalt kann dann das Fluten erfolgen. In diesem Fall würde das Flutungsmaterial nach der Aushärtung als Kleber dienen. Mit einem solchen Verfahren könnte man auch eine sehr kompakte und blasenfreie Klebeschicht erzeugen. Gerade das Problem der Blasenbildung bei herkömmlichen Klebertechniken beschert oftmals eine große Ausschussrate. Diese Ausschussrate könnte mir der vorliegenden Erfindung erheblich reduziert werden. Kombiniert man diesen Verfahrensschritt des Verklebens damit, dass ein Material eingefüllt wird, welches nach dem Aushärten einen reflektierenden oder teilweise reflektierenden Zustand einnimmt, so kann man auch ohne weiteres eine Kleberschicht ausbilden, die gleichzeitig die Reflexionsfunktion erfüllt, so dass keine separate Beschichtung erforderlich ist.

Die Prozesstechnik des Flutens oder Überflutens lässt sich mit einer Vielzahl von bekannten Vorrichtungen kombinieren, die auf jeweilige Anforderungen spezieller optischer Formate zugeschnitten sein können. So ist es beispielsweise möglich, eine Kunststoffmaschine mit einer sogenannte Wendeplatten-, Drehtisch- oder Schiebetisch-Schließeinheit zu verwenden. An den verschiedenen Elementen der Schließeinheit sind dann verschiedene Werkzeugteile angeordnet, die in Kombination miteinander die gewünschten Kavitäten erzeugen können. In diesen Kavitäten lassen sich dann die verschiedenen Schichten des herzustellenden Datenträgers erzeugen. Beispielsweise ist es möglich, in einer ersten Kavität eine Trägerschicht herzustellen. Diese Trägerschicht kann auch aus einem herkömmlichen Thermoplastmaterial gebildet sein. Nach dem Aushärten wird die Trägerschicht in eine weitere Kavität verbracht, in der nach dem Einbringen der Trägerschicht auf einer Seite eine dünne scheibenförmige Kavität ausgebildet wird. Durch Einfüllen eines oben beschriebenen Material mit niedriger Viskosität in diese dünne scheibenförmige Kavität kann die Trägerschicht überflutet werden. Befindet sich in der Kavität gegenüberliegend der Trägerschicht noch eine an sich übliche Matrize (Stamper), so bildet sich auf der dünnen Schicht die Information ab, wodurch diese Schicht eine Informationsschicht bildet. Befinden sich noch reflektierende Partikel in dieser Schicht, so bildet sich gleichzeitig eine Reflexionsschicht aus. Nunmehr kann man das gebildete Produkt in eine weitere Kavität verbringen, wobei wiederum - nunmehr auf der Informationsseite eine dünne scheibenförmige Kavität ausgebildet wird. Durch nochmaliges Überfluten kann eine weitere Schicht ausgebildet werden. Auf diese Art und Weise ist ein sukzessive schichtförmiger Aufbau des optischen Datenträgers möglich, wobei auch sehr dünne Schichten gebildet werden können. Dabei muss natürlich vor einem Entformprozess aus einer Kavität eine Aushärtung oder zumindest teilweise Aushärtung der gebildeten Schicht erfolgen.

Auf der anderen Seite kann das so gebildete Produkt in einem Teil eines Werkzeugs verbleiben, so dass nur jeweils das andere Werkzeugteil zur Bildung einer weiteren Kavität ausgetauscht werden muss. Möglich ist es auch nur einen Werkzeugeinsatz, in dem die jeweilige Schicht gebildet ist, handzuhaben. Damit würde auch das Handling der jeweils gebildeten Teile der optischen Datenträger vereinfacht sein, da nur eine kleine Einheit entnommen bzw. transportiert werden muss. Insbesondere dann wenn die Zykluszeiten für die unterschiedlichen Schichten unterschiedlich groß sind, würde sich mit dem gesondert handhabbaren Werkzeugeinsatz eine gute Möglichkeit ergeben, solche Zykluszeitunterschiede auszugleichen. Insgesamt ist es damit auch klar, wie eine Wendeplatten-, Drehtisch oder Schiebetisch Schließeinheit für die Produktion verwendet werden kann.

Ohne weiteres ist es auch möglich je nach Produktionsverfahren zwischen zwei Schichten eine Farbschicht anzuordnen, wie sie für einen beschreibbaren optischen Datenträger (CD-R, DVD-R) üblich ist. In diesem Fall muss eine solche Farbschicht auf eine Informationsschicht vor der Weiterverarbeitung (Überfluten, Verkleben) aufgebracht werden.

Eine Alternative zu dem vorgenannt beschriebenen sukzessiven schichtförmigen Aufbau durch schrittweises Überfluten unter Ausbildung einer jeweils neuen Schicht, kann auch ein separates Ausbilden von Schichten erfolgen, die dann miteinander in einer Kavität in der oben beschriebenen Weise verklebt werden. Dies könnte im Einzelnen beispielsweise so vonstatten gehen, dass in einer Kavität zunächst eine erste Schicht ausgebildet wird und in einer separaten zweiten Kavität eine zweite, evtl. sehr dünne zweite Schicht ausgebildet wird (z.B. die 0,1 mm Schicht für die obersten Deckschicht einer BluRay Disc). Anschließend können beide Schichten in eine Werkzeug eingebracht werden, in der durch Schließen zwischen den beiden Schichten ein dünner Zwischenraum ausgebildet wird, in dem - wie oben beschrieben - ein Klebematerial eingefüllt wird. Um eine 0,1 mm dünne Schicht nicht zu beschädigen kann diese dabei in dem Teil des Formwerkzeugs verbleiben, in dem sie gebildet wurde, wobei dieses Teil des Formwerkzeug, dann ebenfalls ein Teil des späteren Formwerkzeugs ausbildet. Damit dient dieses Formwerkzeug selbst als Handlingsteil. Natürlich kann das Handlingsteil auch ein Einsatz für ein Formwerkzeug sein, welches separat gehandhabt werden kann.

Eine kleine Auswahl der Möglichkeiten der vorliegenden Erfindung soll in den nachfolgenden Ausführungsbeispielen und mit Bezug auf die beigefügten Zeichnungen aufgezeigt werden. Die Zeichnungen zeigen im Einzelnen:

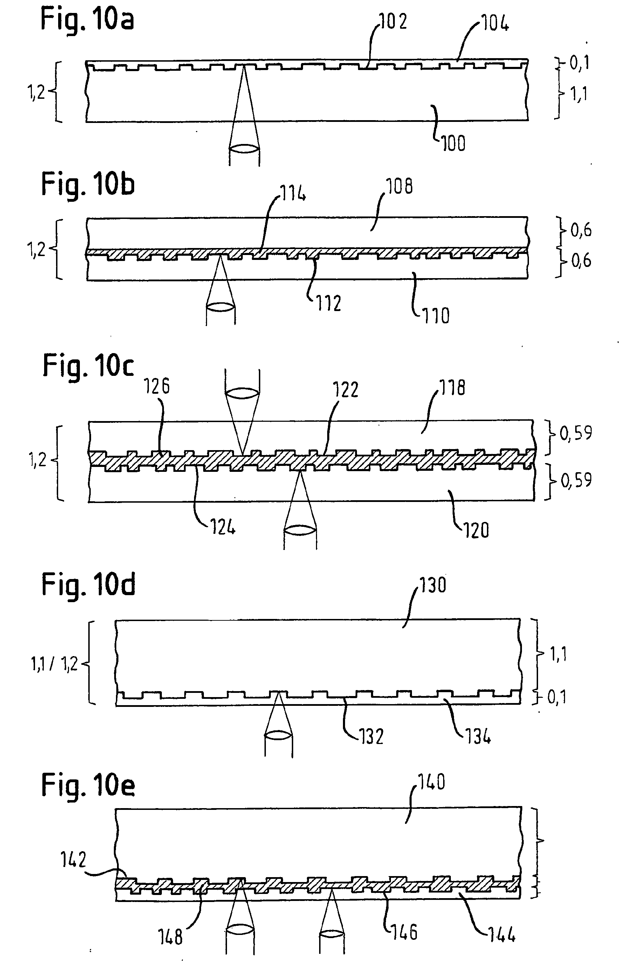

- Fig. 1:: in schematischer Weise eine Lesevorrichtung für das Auslesen der auf einem optischen Datenträger gespeicherten Information,
- Fig. 2:: eine schematische Darstellung eines halben optischen Datenträgers mit Dimensionierung,
- Fig. 3:: den Aufbau einer DVD-5 (single-Side, single-Layer),
- Fig. 4:: eine schematische Oberflächendarstellung einer DVD (Halbseite),
- Fig. 5a:: einen schematischen Aufbau einer single-Side-, single-Layer-DVD,
- Fig. 5b:: den schematischen Aufbau einer single-Side-, double-Layer-DVD,
- Fig. 5c:: den schematischen Aufbau einer doubl-Side-, single-Layer-DVD,
- Fig. 5d:: den schematischen Aufbau einer doubl-Side-, double-Layer-DVD,
- Fig. 6:: eine Darstellung der unterschiedlichen Dimensionen und des unterschiedlichen Aufbaus zwischen einer DVD-5 zu einer BluRay Disc,
- Fig. 7:: eine Darstellung der unterschiedlichen Daten beim Übergang von einer CD zu einer DVD zu einer BluRay-Disc,
- Fig. 8:: eine schematische Darstellung, die das Problem der Störan fälligkeit von BluRay-Discs zeigt,
- Fig. 9:: eine Gegenüberstellung in den Daten von CD, DVD und BluRay-Disc,
- Fig. 10a-g:: verschiedene Ausführungsformen von erfindungsgemäßen optischen Datenträgern gemäß der vorliegenden Erfindung in stark schematisierter Darstellung,
- Fig. 11a-b:: eine schematische Darstellung, anhand derer das Problem beim Aufbringen einer Sputterschicht und deren Lösung beschrieben wird.
- Fig. 12a-b:: eine schematische Darstellung des Herstellungsschritts einer BluRay-Disc gemäß einem ersten Herstellverfahren,
- Fig. 13a-b:: die schematische Darstellung der Herstellung einer BluRay-Disc gemäß einem weiteren Herstellverfahren,
- Fig. 14:: die schematische Darstellung der Herstellung einer double-Layer-BluRay-Disc,
- Fig. 15: in sehr schematischer Weise die Verwendung einer Wendeplatten-Schließeinheit zur Durchführung eines erfindungsgemäßen Verfahrens und
- Fig. 16a-g: in schematisch skizzierter Weise verschiedene Verfahrensabläufe zur Herstellung einer BluRay Disc.
Im folgenden sollen in beispielhafter Weise die verschiedenen Möglichkeiten zur Herstellung unterschiedlicher Datenträger insbesondere anhand der Figuren 10a-10g, 12a-12b, 13a-13b und 14a-14c erläutert werden. Insbesondere wird dabei auch auf die Möglichkeiten der Herstellverfahren und auf verschiedene Vorrichtungen Bezug genommen, wobei bei den Vorrichtungen keine vollständigen Anlagen mit Einspritzeinheiten und Schließeinheiten dargestellt sind. Die ist für die Erläuterung der vorliegenden Erfindung auch nicht erforderlich.

Wie vorgenannt bereits erwähnt, ist ein wesentliches Merkmal der vorliegenden Erfindung der Einsatz eines vor dem Aushärten möglichst niedrig viskosen Materials zum Überfluten eines Substrats zu verwenden, wobei das niedrig viskose Material nach dem Aushärten gleichmäßig transparent ist und eine hohe optische Güte aufweist, welche die Durchstrahlung mit einem Laser ermöglicht.

In Fig. 10a ist in lediglich schematischer Darstellung eine CD gezeigt, die eine Dicke von ca. 1,2 mm besitzt. Die CD besteht herkömmlicher Weise im wesentlichen aus einem Substrat 100 mit einer Dicke von 1,1 mm. Auf dieses Substrat ist während eines an sich bekannten Spritzgießprozesses eine Informationsstruktur (in der Figur oben) aufgebracht. Diese Informationsstruktur wird dann mit einer reflektierenden Schicht 102 beschichtet (Sputterschicht), so dass beim Bestrahlen mit einem Laserlicht je nach dem Vorhandensein eines "pits" oder eines "lands" eine entsprechende Reflektierung hervorgerufen wird. Anschließend ist nach der Beschichtung mit der reflektierenden Schicht 102 noch eine Schutzschicht von ca. 0,1 mm vorgesehen, so dass sich insgesamt die Dicke von 1,2 mm ergibt. Herkömmlicherweise wird die Substratschicht in einem Spritzgießprozess hergestellt, bei dem aufgeschmolzenes Polycarbonatmaterial in eine Kavität, in der eine Matrize angeordnet ist, eingebracht wird. Wird als Schutzschicht 104 eine reflektierende Schutzschicht verwendet, so kann die reflektierende Sputterschicht 102 entfallen.

Allerdings kann als Substrat auch ein reaktives Polyurethanmaterial gewählt werden, welches in eine entsprechende Kavität eingebracht wird. Befindet sich in der Kavität wiederum eine Matrize, so wird auch hier die Information entsprechend abgebildet. Auf dieser die Information beinhaltenden Oberfläche kann zugleich als reflektierende Schicht aber auch als Schutzschicht eine weitere Polyurethanschicht oder ein Klarlack durch Überfluten aufgebracht werden. Dabei wird ein Material verwendet, welches reflektierende Partikel aufweist, so dass im ausgehärteten Zustand eine reflektierende Schicht 102 gebildet ist. Diese reflektierende Schicht würde dann gleichzeitig auch die Funktion der Schutzschicht 104 übernehmen. Auf diese Weise würde man sich mit der vorliegenden Erfindung einen separaten Beschichtungsschritt zur Aufbringung der reflektierenden Oberfläche sparen.

Eine weitere Möglichkeit, die vorliegende Erfindung einzusetzen soll mit Bezug auf Fig. 10b geschildert werden. In Fig. 10b ist eine DVD-5 (single-Side, single-Layer) dargestellt ist. Die DVD-5 weist eine erste (hier obere) Schicht auf die lediglich Trägerfunktion hat und somit als "Dummyschicht" 108 bezeichnet werden kann. Diese Schicht wird üblicherweise durch Spritzgießen hergestellt und besitzt eine Schichtdicke von ungefähr 0,6 mm. Allerdings könnte auch diese Schicht bereits aus einem Polyurethanmaterial hergestellt werden.

Die Information dieses optischen Datenträgers selbst ist in einer Informationsschicht 110 aufgebracht, die ebenfalls eine Dicke von etwa 0,6 mm besitzt. Die Informationsschicht ist gleichzeitig auch Deckschicht. Eine geforderte Kratzfestigkeit kann durch Aufbringen einer besonders kratzfesten Schicht, wie sie beispielsweise von der Firma TDK entwickelt wurde (Schichtstärke 2 µ m) hergestellt werden. Auch diese Informationsschicht 110 kann in bisheriger Weise durch separates Spritzgießen hergestellt werden. Fertigt man diese Schicht aber auch aus Polyurethan so ist die Kraftfestigkeit bereits gegeben und eine separate Beschichtung mit einer kratzfesten Schicht ist nicht erforderlich.

Liegen die beiden oben genannten Schichten 108 und 110 vor, also die Dummyschicht 108 und die Informationsschicht 110, so können sie einer Form derart aufgenommen werden, dass sie in genau definierter Weise (z.B. mit einem Spalt einer Breite von 0,1 mm) beabstandet sind. In diese auch gegenüber der Außenumgebung abgeschlossene Form kann dann ein dünnflüssiges Klebermedium eingebracht werden. Dafür eignet sich nicht nur Polyurethan, sondern auch ein UV-aushärtbarer Kleber oder eine andere lösungsmittelhaltige Kleberflüssigkeit. Versieht man diese Kleberschicht, egal ob sie aus einem UV-aushärtbaren Material oder aus Polyurethan besteht, mit reflektierenden Partikeln , so könnte man sich die - an sich notwendige - reflektierende Beschichtung 112 sparen. Dies führt nicht nur zu einer Kostenreduktion sondern auch zu einer Effizienzerhöhung.

Es gibt jedoch eine weitere Möglichkeit, die DVD-5, wie in Fig. 10b abgebildet, zu realisieren. Beispielsweise kann zunächst die Dummyschicht 108 gebildet werden (Spritzgießen oder Gießprozess). Diese Dummy-schicht 108 kann dann in eine Kavität derart eingelegt werden, dass auf einer Seite ein Kavitätsspalt frei bleibt. In diesen Kavitätsspalt wird ein Polyurethanmaterial oder ein Klarlackkleber zur Ausbildung der Schicht 114 bei Überfluten der Dummyschicht 108 eingebracht. Dabei ist an der der Dummyschicht gegenüberliegenden Seite der Kavität eine Matrize angeordnet, deren Struktur sich nach dem Abgießen in der Schicht 114 wiederfinden. Nach dem Aushärten der Schicht 114 wird die Kombination aus Dummyschicht 108 und Schicht 114 in eine weitere Kavität eingelegt, wo wiederum ein Kavitätsspalt übrig bleibt, der in seiner Dimension genau der herzustellenden Informationsschicht entspricht. Nur wird diese Informationsschicht dann als Deckschicht ausgebildet, da sich die Information bereits auf der Oberfläche der Schicht 114 befindet. Das Material für die Schicht 110 kann dann ebenfalls wieder aus einem aushärtbaren und hochtransparenten Polyurethanmaterial bestehen.

Die Realisierung eines solchen Verfahrens ist insbesondere mit modernen Wendeplatten- oder Drehtellermaschinen möglich. In diesem Zusammenhang muss darauf hingewiesen werden, dass insbesondere bei der Flutungs- und Überflutungstechnik keine großen Schließkräfte aufzunehmen sind, so dass auch Schließeinrichtungen mit relativ kleinen Schließkräften verwendet werden können.

In Fig. 10c ist die Anwendung der vorliegenden Erfindung bei einer DVD (double-Side, single-Layer) dargestellt. Diese DVD besitzt ebenfalls wiederum eine Gesamtdicke von 1,2 mm und weist im wesentlichen zwei Informationsschichten mit ca. 0,59 mm Dicke auf. Im Gegensatz zur DVD-5 in Fig. 10b besteht die DVD in Fig. 10c nunmehr aus zwei Informationsschichten 118 und 120, die miteinander verklebt sind. Anzumerken ist, dass das Auslesen der Information von zwei verschiedenen Seiten erfolgt.

Bei der Herstellung kann man nun mit einem normalen Polycarbonatmaterial die obere Informationsschicht 118 spritzgießen. Sodann kann man diese Informationsschicht in eine Kavität einfügen, wobei ein Kavitätsspalt übrig bleibt, in den ein Polyurethanmaterial eingegossen wird. Beispielsweise kann dieses Polyurethanmaterial dann so ausgebildet sein, so dass eine Reflexion auf beiden Seiten möglich ist. Überdies kann man auf die Oberfläche der zweiten Schicht weitere Informationen abbilden, so dass nunmehr eine weitere Informationsschicht gebildet ist. Die Schicht 120 kann dann ebenfalls wieder durch Einbringen der Kombination aus erster und zweiter Informationsschicht 118 und 126 in eine weitere Kavität unter Ausbilden eines weiteren Kavitätsspalts durch Überfluten erzeugt werden. Natürlich müssen auch hierbei vor einem Teilentformen die jeweiligen Schichten aushärten oder zumindest teilweise aushärten. Nach dem Herstellen des optischen Datenträgers liegen somit eine erste transparente Schicht 118 vor, die gleichzeitig als Deckschicht wirkt und eine zweite transparente Schicht 120, die gleichzeitig als zweite Deckschicht wirkt. Dazwischen ist eine Spiegelschicht angeordnet. Die Informationsoberflächen sind in den Übergängen zwischen den Schichten 118 und 126 einerseits und 120 und 126 andererseits angeordnet. Insofern kann man bei dem fertigen Produkt nicht mehr ohne weiteres feststellen, welche Schichten als Informationsschicht bezeichnet werden sollen. Bei dem optischen Datenträger in Fig. 10c werden die Informationen in den Schichten - wie schematisch durch die Linsen und den Laserstrahl angedeutet - von beiden Seiten ausgelesen.

Alternativ können beide Informationsschichten 118 und 120 durch separate Spritzgießprozess hergestellt werden und anschließend in einer Kavität mit einem definierten Spalt/Abstand zueinander ausgerichtet werden. In den Spalt zwischen den beiden in einer Kavität angeordneten Informationsschichten 118, 120 wird dann ein reflektierendes, UV-aushärtbares Material oder ein reflektierendes Polyurethanmaterial eingebracht, welches dann die beiden Informationsschichten 118, 120 beim Aushärten miteinander verklebt. In beiden Fällen erübrigt sich eine Beschichtung der jeweiligen Informationsschicht, da die Reflexionsschichten 122, 124 durch die reflektierende Kleberschicht 122 realisiert wird.

Eine weitere Möglichkeit für die Anwendung der vorliegenden Erfindung ist in Fig. 10d dargestellt. Diese Figur zeigt in stark schematisierter Form eine moderne BluRay-Disc, bei der die Substratdicke etwa 1,1 mm beträgt und die Deckschicht im Bereich von 0,1 mm liegt. Die Herstellung der BluRay Disc in der erfindungsgemäßen Weise ist nun ausgesprochen einfach.

Zunächst kann - wie dies auch herkömmlicherweise geschieht - das mit Information versehene Substrat 130 durch Spritzgießen hergestellt werden. Dazu wird Polycarbonatmaterial in eine Kavität mit einer Matrize eingespritzt. Anschließend kann die Oberfläche mit einer metallischen Schicht 132 versehen werden, die beispielsweise durch Sputtern aufgebracht werden kann. Als nächstes kann die Substratschicht 130 in eine Kavität unter Ausbilden eines geringen Kavitätsspalts eingebracht werden. Weiter kann eine Überflutung auf der Informationsseite durchgeführt werden, deren Dicke aufgrund des entsprechend eingestellten Spaltes präzise 0,1 mm beträgt. Durch Verwendung von Polyurethan als Deckschichtmaterial kann eine hohe Kratzfestigkeit erreicht werden. Natürlich können für die Deckschicht auch hier andere vor dem Aushärten niedrig viskose Materialien verwendet werden, die nach dem Aushärten transparent sind und eine hohe optische Qualität mit dem gewünschten Brechungsindex aufweisen. In diesem Zusammenhang sollte darauf hingewiesen werden, dass die Wahl des Brechungsindexes auch Auswirkung auf die Materialdicke einer Schicht haben kann, da sich mit dem Brechungsindex die Fokussierung des Laserstrahls verändert.

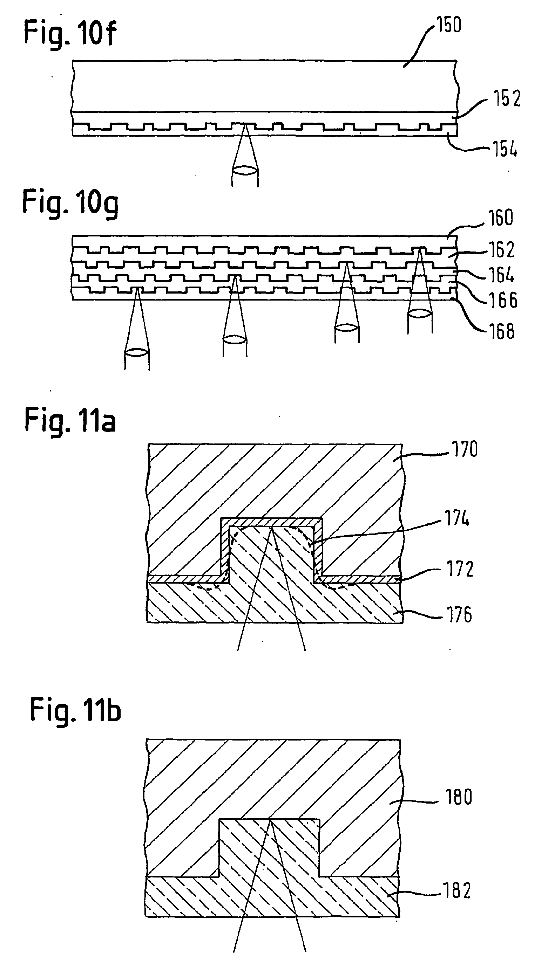

Da sich allerdings bereits bei der Herstellung der BluRay InformationsStrukturen mit einem Spritzgießprozess Probleme ergeben können, könnte auch bereits den erste Schritt durch Ausgießen einer Kavität mit Polyurethan (oder einem anderen, vor dem Aushärten niedrig viskosen Material) anstatt eines Spritzprozesses erfolgen. Insofern würde sich das Verfahren gegenüber dem zu Fig. 10 a geschilderten Verfahren umkehren. Auch kann hier eine separate Beschichtung (z.B. Sputterschicht) mit einer reflektierenden Schicht vermieden werden, wenn man als Material für die Schicht 130 ein Material verwendet, welches nach dem Aushärten reflektiert.

Eine andere Möglichkeit, wie man sich ein separates Beschichtungsverfahren sparen kann, wird mit Bezug auf Fig. 10f geschildert. Analog wie im Ausführungsbeispiel zu Fig. 10b kann auch bei Herstellung der BluRay Disc zunächst eine Dummysubstratschicht 150 hergestellt werden (z.B. durch Spritzgießen). Diese Dummysubstratschicht wird dann in oben bereits erwähnter Weise in einer Kavität unter Abbilden der Information mit einem Polyurethanmaterial oder einem ähnlich dünnflüssigen Material 152 überflutet wird, wobei diese Schicht nach dem Aushärten reflektierend ausgebildet ist. Die Kombination aus der Dummyschicht 150 und der reflektierenden Schicht 152 wird dann nochmals in einer Kavität mit einer Deckschicht, mit genau 0,1 mm überflutet, so dass die optischen Anforderungen erfüllt sind.

Auch das gerade beschriebene Verfahren lässt sich auf sehr einfache Weise in einer Wendeplatten-, Drehtisch oder Schiebetisch-Anordnung realisieren. Legt man vor dem ersten Spritzgießvorgang ein Label in die Kavität ein (In-Mould-Labeling), so ist die Blue-Ray Disc beispielsweise in einer Wendeplattenmaschine in einem Zyklus mit 3 Schritten herzustellen, wobei bei nach dem 3. Schritt die fertige Disc vorliegt. In diesem Zusammenhang soll kurz das Herstellungsverfahren mit einer Wendeplattenmaschine beschrieben werden.

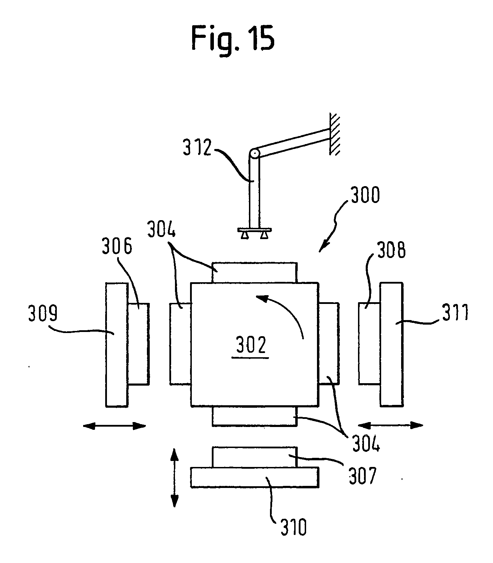

In Fig. 15 ist in sehr schematisierten Weise eine Wendeplatten-Schließeinheit 300 (Draufsicht) nur mit den für die Erläuterung notwendigen Teilen dargestellt. Die für die Erläuterungen unwesentlichen Teile wurden der Einfachheit halber weggelassen. Gemäß Fig. 15 ist in der Schließeinheit 300 zentral eine drehbar angeordneter Würfel vorgesehen. An den vier Seiten des Würfels sind jeweils Formwerkzeugteile 304 angeordnet, die allesamt gleich ausgebildet sind. Überdies sind 3 Aufspannplatten 309, 310 und 311 vorgesehen, die 90° versetzt zueinander angeordnet und jeweils linear vor- und zurückbewegbar (vgl. Pfeile) sind. An jeder Formaufspannplatte ist ein weiteres Formwerkzeugteil 306, 307 und 308 angeordnet, die verschieden ausgebildet sind. Durch Schließen der Formwerkzeugteile 306 und 304 lässt sich eine erste Kavität herstellen; durch Schließen der Formwerkzeugteile 307 und 304 lässt sich eine zweite Kavität herstellen; durch Schließen der Formwerkzeugteile 308 und 304 lässt sich eine dritte Kavität herstellen; Gegenüberliegend der Aufspannplatte 310 ist eine Roboteinrichtung 312 zur Entnahme vorgesehen. Bei der Herstellung der BluRay Disc gemäß Fig. 10f - wie auch oben beschrieben, wird zunächst bei geschlossener erster Kavität die Schicht 150 hergestellt. (Die Plastifizier- und Einspritzvorrichtung ist vorliegend nicht dargestellt). Dabei wird vor dem Schließen der ersten Kavität ein Label eingelegt. Nach dem Schließen der ersten Kavität wird ein aufgeschmolzenes Polycarbonat-Material oder ein Polyurethanmaterial eingespritzt. Nach dem Aushärten der Schicht 150 wird die erste Kavität geöffnet, wobei das die Schicht 150 an in dem Werkzeugformteil 304 verbleibt und lediglich aus dem Werkzeugformteil 306 entformt wird. Anschließend wird der Würfel mittels eines (nicht dargestellten Antriebs) um 90° im Gegenuhrzeigersinn (in Fig. 15) gedreht. Durch Zufahren des Formwerkzeugteils 307 wird eine zweite Kavität ausgebildet, in der die Schicht 150 aufgenommen ist. Dabei wird der oben bereits beschriebene dünne Kavitätsspalt gebildet. Überdies ist in dem Werkzeugformteil 307 eine Matrize (nicht dargestellt) eingelegt. Durch Einfüllen/Eingießen eines Polyurethan-Materials, in welchem reflektierende Partikel aufgenommen sind, kann die Schicht 152 bei Überfluten der Schicht 150 hergestellt werden. Nach dem Aushärten der Schicht 152 wird die zweite Kavität geöffnet, wobei die Kombination aus mit der Schicht 152 überfluteter Schicht 150 in dem Werkzeugformteil 304 verbleibt und lediglich aus dem Werkzeugformteil 307 entformt wird. Anschließend wird der Würfel mittels des Antriebs wiederum um 90° im Gegenuhrzeigersinn gedreht. Durch Zufahren des Formwerkzeugteils 308 wird eine dritte Kavität ausgebildet, in der die Schicht 154 durch Übergießen der Schicht 152 mit einem UV-aushärtbaren Klarlack oder einem Polyurethanmaterial ausgebildet wird. Nach dem Aushärten dieser Schicht wird das Werkzeug geöffnet und anschließend der Würfel 302 wiederum um 90° gedreht. Nun wird die fertige Blue-RayDisc mit dem Robotarm 312 entnommen werden. Natürlich können alle Fertigungsschritte in der ersten, zweiten und dritten Kavitäten - ebenso wie die Entnahme durch den Robotarm - gleichzeitig ablaufen, so dass nach jeder 90° Drehung an jeder Seite des Würfels eine Arbeitsschritt durchgeführt wird und man nach jeder 90° Drehung eine fertige Disc entnehmen kann. Gegenüber einer herkömmlichen DVD-Anlage spart man sich nicht nur die Beschichtungsvorrichtung für die reflektierende Schicht sondern auch die gesamte Nachfolgeeinrichtung inkl. der Bonding-Station.

Gegenüber dem anhand Fig. 15 beschriebenen Verfahren könnte man sich eine Kavität sparen, wenn man nach dem ersten Überflutungsvorgang das Werkzeug um 0,1 mm öffnet und einen zweiten Überflutungsvorgang durchführt. Allerdings würde sich dann auch auf dieser Oberfläche eine Pit-Struktur abbilden. Diese Pit-Struktur könnte dann durch nachträgliches Lackieren " eingefüllt" werden. Dabei sollte die optischen Eigenschaften der obersten Lackschicht und der darunterliegenden Schicht möglichst gleich sein, so dass es zu Störung durch die ungewollt abgebildete Pit-Struktur kommt.

Ebenso lässt sich mit der vorliegenden Erfindung eine zukünftig noch zu entwickelnde BluRay double-Layer Disc, wie in Fig. 10e gezeigt, herstellen, dabei kann eine Substratschicht 140 beispielsweise mit einem Thermoplastmaterial spritzgegossen oder mit einem PUR-Material hergestellt werden.

Ferner kann eine Informationsschicht 144 separat, beispielsweise in einer eigenen Kavität, aus einem Klarlack oder einem Polyurethan-Material hergestellt werden. Diese beiden Teile können dann in einer weiteren Kavität mit bestimmtem Abstand zueinander aufgenommen und beispielsweise über Vakuum gehalten werden. Der Abstand zwischen den beiden Schichten 140 und 144 wird mit einem Klebematerial gefüllt. Von seiner optischen Wirkung her ist die Schicht 140 dabei vollreflektierend, die Schicht 148 teilreflektierend ausgebildet, so dass an den Übergängen 142 und 146 entsprechende Laserreflektionen auftreten.

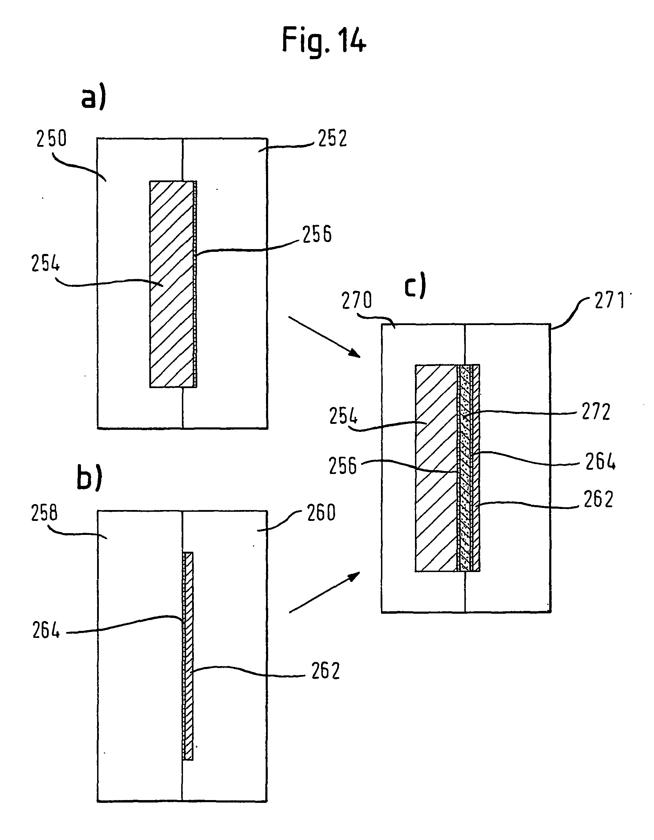

Insbesondere das Handhaben von Schichten, die eine Schichtdicke im Bereich von 0,1 mm haben, hat sich bisher als schwierig erweisen. In diesem Zusammenhang, und dies wird später noch mit Bezug auf Fig. 14 beschrieben, ist es hilfreich, wenn bei einer solch separaten Herstellung einer dünnen Schicht diese dünne Schichte bis zur Herstellung des Gesamtproduktes in ihren jeweiligen Werkzeugform verbleibt.

Eine eher in die Zukunft gerichtete Möglichkeit, die Erfindung anzuwenden, ist in Fig. 10g gezeigt. Hier sind vier informationstragende Schichten 160, 162, 164,166 aufeinandergefügt. Jede Schicht wird bei einem Produktionsschritt schrittweise neu hinzugefügt. Zunächst wird die erste Informationsschicht 160 in einer Kavität gebildet. Diese erste Informationsschicht 160 kann dann in einer weiteren Kavität durch Überfluten mit einem niedrig viskosen Material, beispielsweise Polyurethan, zu einer Scheibe mit einer zweiten Informationsschicht ausgebildet werden. Durch Einbringen dieses Produktes in eine weitere Kavität kann durch erneutes Überfluten eine weitere Informationsschicht 164 gebildet werden und durch einen nochmaligen Überflutungsvorgang kann in einer weiteren Kavität die vierte Informationsschicht 166 gebildet werden. Natürlich sollte vor einem entformen und weiteren Überfluten die zuletzt gebildete Schicht zumindest teilweise ausgehärtet sein. Die letzte Informationsschicht 166 wird dann noch mal mit einem Klarlack oder einem transparenten Polyurethan überflutet.

Bei der Ausbildung jeweils einer neuen Informationsschicht wird natürlich in der Kavität jeweils eine Matrize mit dem jeweiligen Informationsgehalt angeordnet sein, so dass die Oberflächenstruktur durch die jeweilige Informationsschicht wunschgemäß abgeformt wird. Natürlich ist auch festzuhalten, dass die inneren Informationsschichten 162 bis 166 teiltransparent sein müssen, so dass eine Fokussierung auf die darunter liegende Schicht möglich ist. Dies ist beispielsweise durch die jeweilige Beschichtung nach der Bildung einer jeden Informationsschicht möglich, wobei man die erste Informationsschicht 160 spiegelnd ausbilden kann, so dass es zwischen dieser Schicht 160 und der Informationsschicht 162 keiner eigenen reflektierenden Schicht bedarf. Alternativ kann natürlich auch jede innere Informationsschicht selbst so gewählt sein, dass sie nach dem Aushärten teilreflektierend wirkt.

In jedem Fall sieht man gerade an diesem Beispiel (Fig. 10 g) die Möglichkeiten der vorliegenden Erfindung, durch Überfluten in definierten Kavitäten schrittweise einen optischen Datenträger in großer Güte zu realisieren. So könnte die in Fig. 10 dargestellte Multi-Lagen BluRay-Disc eine Speicherkapazität von 100 GB aufweisen.

Ein Problem der besonderen Art ist in Fig. 11a gezeigt. Zur Realisierung einer reflektierenden Schicht wird ein Substrat 170 bisher üblicherweise durch einen Sputtervorgang beschichtet. Idealerweise sollte sich die Sputterschicht geometrisch exakt an die im Substrat ausgebildete Struktur anlegen, insbesondere wenn so ausgelesen wird, wie dies in Fig. 11a gezeigt ist (vgl. schematische Darstellung des fokussierten Laserstrahls. Eine gewünschte Idealschicht ist mit Bezugsziffer 172 dargestellt. Sie wird jedoch in der Regel - insbesondere bei sehr kleinen Strukturen - nicht erreicht. Vielmehr bildet sich eine Schicht aus, wie dies gestrichelt und mit Bezugsziffer 174 bezeichnet dargestellt ist. Da dieser Effekt umso stärker auftritt, je kleiner die Strukturen sind, wird dieser Effekt insbesondere bei einer BluRay-Disc, bei der eine Pitgröße im Bereich von 0,15 µ m vorliegt, in besonderer Weise problematisch.

Den Nachteil einer ungenauen Geometrieabbildung kann man dann vermeiden, wenn - wie in vielen Beispielen vorgenannt bereits erwähnt und in Fig. 11b im Detail nochmals genauer dargestellt - eine Schicht selbst als reflektierende Schicht ausgebildet wird. In diesem Fall ist die Reflexionsgrenze geometrische exakt der Schichtgrenze entsprechend. Damit lässt sich auf einfache Art und Weise das Problem der ungenauen Geometrieabbildung lösen. Zudem spart man sich die Investition für eine Sputteranlage und einen zusätzlichen Verfahrensschritt.

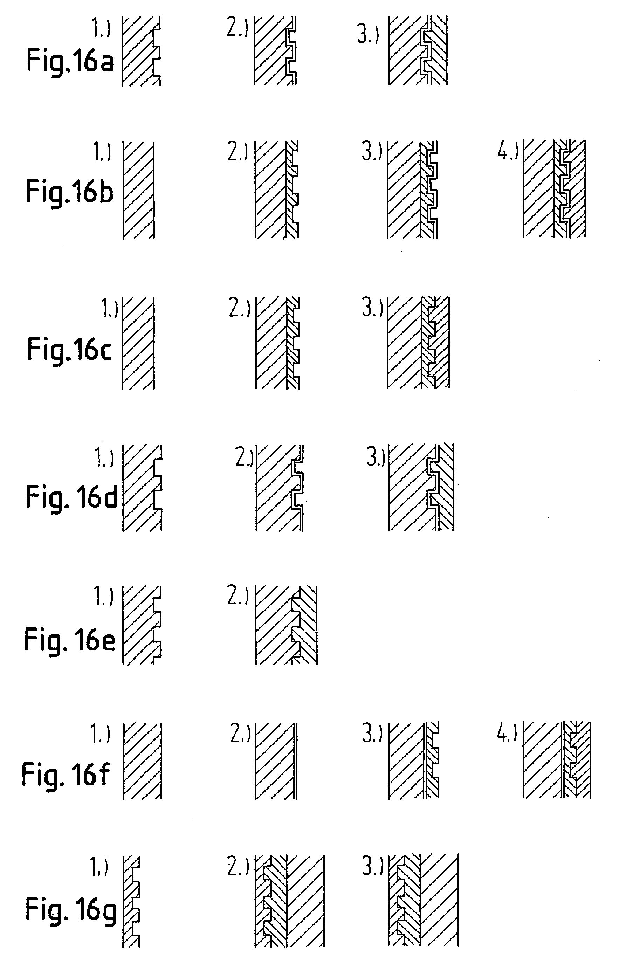

Während in den Fig. 10a bis 10g die Möglichkeiten aus der vorliegenden Erfindung für verschiedene optische Datenträger, nämlich eine CD (Fig. 10a), eine DVD (Fig. 10b), eine DVD-double Side (Fig. 10c), eine BluRay (Fig. 10d), eine BlueRay double Layer (Fig. 10e), etc., aufgezeigt sind, werden mit Bezug auf die Fig. 16a bis 16g die Möglichkeiten aus der vorliegenden Erfindung mit Bezug auf eine einfache BlueRay Disc erläutert.

So ist in Fig. 16a ein Verfahren skizziert, bei dem im Schritt 1 eine erste Schicht mit einem Thermoplastmaterial in herkömmlicher Weise durch einen Spritzprägeprozess hergestellt wird, wobei die Datenstrukturen auf der Oberfläche abgebildet werden. Im zweiten Schritt wird die Oberfläche mit der Datenstruktur durch einen Sputtervorgang mit einer reflektierenden Schicht beschichtet. Im dritten Schritt erfolgt die Bildung der durchsichtigen (aktive) Leseschicht durch eine PUR-Überflutungsvorgang, wie er vorgenannt bereits beschrieben ist.

Beim Verfahren gemäß Fig. 16b wird in einem ersten Schritt eine Dummy-Schicht in einem Spritzgieß- oder Spritzprägeschritt hergestellt, welche anschließend lediglich Trägerfunktion hat. Im zweiten Schritt wird eine Informationsschicht durch Überfluten der Dummy-Schicht mit einem PUR-Material aufgebracht, wobei auf der Oberfläche die Datenstruktur abgebildet ist. Diese Oberfläche wird in einem dritten Schritt in eine, Sputtervorgangs wieder mit einer reflektierenden Schicht versehen. Im vierten Schritt wird wieder - wie auch beim Verfahren in Fig. 16a - eine aktive Leseschicht mittels eines Überflutungsvorganges aufgetragen.

Das Verfahren in Fig. 16c ähnelt demjenigen in 16b recht stark und unterscheidet sich lediglich dadurch, dass im zweiten Schritt die Dummy-Schicht mittels eines PUR-Material überflutet wird, welche nach dem Aushärten voll-reflektierend wirkt. Auf diese Weise erspart man sich den Beschichtungsschritt für eine reflektierende Schicht.

Das in Fig. 16d dargestellte Verfahren entspricht demjenigen in Fig. 16a dargestellten Verfahren mit dem Unterschied, dass bereits die erste Schicht im ersten Schritt mit einem PUR-Material durch einen Gießprozess hergestellt wird.

Mit dem in Fig. 16e dargestellten Verfahren spart man sich gegenüber dem Verfahren in Fig. 16d den Beschichtungsschritt mit einer reflektierenden Schicht. Im ersten Schritt des in Fig. 16e gezeigten Verfahrens wird nämlich bereits die erste Schicht reflektierend ausgebildet, so dass es lediglich noch der Aufbringung der aktiven Leseschicht mittels eines Überflutungsvorganges in Schritt zwei bedarf.

Im Verfahren, welches in Fig. 16f dargestellt ist, wird zunächst mit einem Spritzgieß- oder Spritzprägeverfahren eine transparente Dummy-Schicht mit einem Thermoplastmaterial hergestellt. Sodann wird in Schritt 2 durch eine Reverseprint ein Label aufgeracht, welches durch die transparente Dummy-Schicht zu erkennen ist. Im Schritt drei wird die Informationsschicht durch Überfluten des Reverseprints hergestellt, wobei sich die Informationsstrukturen auf der Oberfläche abbilden. Diese Informationsschicht wird dann im Schritt 4 mit einer PUR-Schicht zur Ausbildung der aktiven Leseseite überflutet.

Im Gegensatz zu den in den Fig. 16a bis 16f dargestellten Verfahren, bei denen der Aufbau des optischen Datenträgers schichtweise erfolgt, wird bei dem in Fig. 16g gezeigten Verfahren im Schritt 1 zunächst eine Schicht hergestellt, die später die transparente und aktive Leseschicht bildet. In dieser Leseschicht ist bereits die Informationsstruktur aufgeprägt. Separat wird eine Dummy-Schicht hergestellt, welche dann in einem Abstand (Schritt 2) zu der ersten Schicht positioniert wird. Der durch die Beabstandung ausgebildete Zwischenraum wird dann mit einem reflektierenden PUR-Material geflutet, wobei die beiden äußeren Schichten miteinander verbunden werden.

Natürlich können die in den Fig. 16a bis 16g gezeigten Verfahrensschritte zur Herstellung anderer optischer Datenträger evtl. beliebig kombiniert werden, um beispielsweise optische Datenträger mit mehreren Informationsschichten herzustellen. In diesem Zusammenhang ist die Kombination von unterschiedlichen Materialien, beispielsweise unterschiedlichen PUR-Schichten interessant, die unterschiedliche Eigenschaften wie Brechungsindex, Farbe, Reflexion, Transparenz miteinander verbinden können, um so beispielsweise die Reflexion oder Fokussierung eines Lasers zu verbessern, was beispielsweise insbesondere bei einem mehrlagigen Informationsschichtaufbau von großem Interesse ist.

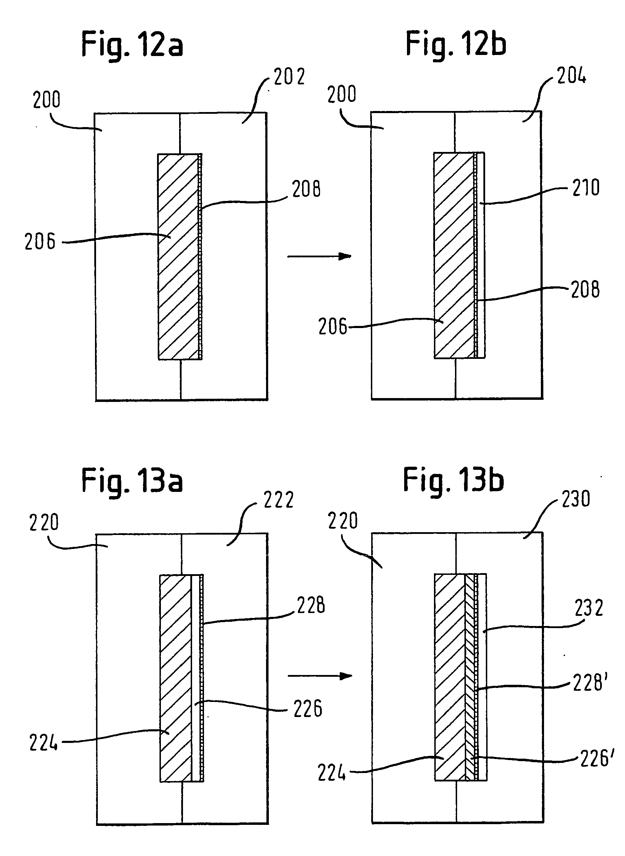

In den nächsten Figuren 12-14 sind (wie auch schon mit Bezug auf Fig. 15 beschrieben) in vereinfachter Weise Herstellungsabfolgen dargestellt, so dass die mit Bezug auf die Figuren 10a-10g beschriebenen optischen Datenträger bezüglich des Herstellverfahrens noch genauer verstanden werden können.

Anhand der Fig. 12a und 12b soll die Herstellung einer BluRay-Disc erläutert werden. Dazu wird in ein Werkzeug, welches aus den Werkzeughälften 200 und 202 besteht, eine Matrize 208 eingelegt, auf der die auf dem Datenträger aufzubringende Information in Masterform enthalten ist. Bei dann geschlossenem Werkzeug - wie dies in Fig. 12 a dargestellt ist - wird beispielsweise ein Polycarbonatmaterial eingespritzt, wobei sich an der rechten Oberfläche die Informationsstruktur ausbildet. Nach dem Aushärten des Polycarbonatmaterials 206 wird die Form geöffnet und durch Anlegen einer weiteren Formhälfte 204 ein dünner Spalt 210 mit einer Dicke von 0,1 mm benachbart zur Informationsoberfläche gebildet. Dieser Spalt 210 kann nunmehr mit einem Klarlack oder einem Polyurethanmaterial überflutet werden. Nach dem Überfluten und Aushärten kann die Disc dieser Form entnommen werden. Nicht dargestellt in den Figuren 12a und 12b ist die an sich notwendige Beschichtung der Informationsfläche 208 mit einer reflektierenden Schicht. Diese kann beispielsweise wie üblich durch Sputtern erreicht werden. Alternativ kann bereits die Schicht 206 reflektierend ausgebildet sein. In diesem Fall kann ein separates Beschichten entfallen.

Eine weitere Alternative - auf ein zusätzliches Beschichten verzichten zu können - ist in den Fig. 13a und 13b dargestellt. Hier ist in einem Werkzeug mit den Werkzeughälften 220 und 222 eine Dummyschicht 224 eingelegt, die vorher gesondert hergestellt worden ist. Zwischen der rechten Oberfläche der Dummyschicht 224 und dem Werkzeug 222 ist ein Kavitätsbereich 226 in Form eines dünne Spaltes frei, in dem nun unter Ausbildung der auf der Matrize 228 gespeicherten Information ein niedrig viskoses und im ausgehärteten Zustand reflektierendes Material eingebracht wird, welches den Dummy 224 überflutet. Dabei wird die Struktur einer Matrize 228 auf diese Schicht abgeformt.

In Fig. 13b ist die Formhälfte 222 durch eine andere Formhälfte 230 ersetzt, wodurch sich ein weiterer Kavitätsspalt 232 rechts der reflektierenden Informationsschicht 226' gebildet hat. In diesen Kavitätsspalt kann nun ein Material eingebracht werden, welches im ausgehärteten Zustand transparent ist und ein Durchstrahlen mit einem Laser bis zur Informationsschicht 226' bzw. bis zu dessen Oberfläche 228' erlaubt. Durch die Verwendung entsprechend ausgebildeter Werkzeughälften 220 und 230 kann der Kavitätsspalt 232 in genau erforderlicher Weise mit einer Dicke von 0,1 mm eingestellt werden, so dass sich sehr präzise der optische Datenträger - hier die BluRay - ausbilden lässt.

Ein weiteres Fertigungsverfahren, nunmehr für eine BluRay mit doppelter Datenträgerschicht, ist in den Figuren 14a-14c beschrieben. In Fig. 14a wird zunächst eine dickere Informationsschicht 254 in einer Weise wie vorher in Fig. 12a beschrieben dargestellt. Insbesondere wird in einem Werkzeug bestehend aus den beiden Werkzeughälften 250 und 252 zunächst eine Substratschicht gebildet, welche über eine Matrize 256 die entsprechende Information aufgeprägt bekommt.

Parallel und separat wird in einem weiteren Werkzeug, bestehend aus den Werkzeughälften 258 und 260 durch Einfließen eines entsprechend vor dem Aushärten, niedrig viskosen Materials eine Informationsschicht mit einer Dicke von 0,1 mm gebildet, welche auf der linken Seite ebenfalls eine aufgeprägte Informationen 264 besitzt. Diese beiden Schichten 254 und 262 werden nun in einem definierten Abstand zueinander in einer weiteren Form angeordnet. Diese weitere Form besitzt die vorliegend die Formhälften 270 und 271, wobei es von Vorteil ist, dass die Formhälften 260 und 271 identisch sind, so dass die 0,1 mm dünne Schicht nicht aus der Werkzeugform gelöst werden muss. Nach dem Zusammenfügen der beiden Formhälften 270 und 271 liegt ein definierter Abstand zwischen den beiden Informationsschichten vor. In dieses gegenüber der Außenumgebung abgeschlossenen Kavitätsvolumen wird nun ein dünnflüssiges Klebematerial eingefüllt, dabei kann es sich um ein teilreflektierendes Polyurethanmaterial oder um ein sonstiges Teil einer aushärtbaren und im ausgehärteten Zustand teilreflektierenden Schicht handeln. Wird die erste Schicht 254 vollreflektierend ausgebildet, so kann die double-Layer BluRay-Disc fertig entnommen werden, wobei kein weiterer Behandlungsschritt mehr notwendig ist.

Die Produktionsvarianten lassen sich noch vielfältig erweitern. So ist es ohne weiteres möglich, beim Produktionsschritt in Fig. 12a vor dem Herstellen der Substratschicht 206 ein Label in die Form einzulegen, welches dann hinterspritzt wird. In diesem Fall würde die Disc nach der Herstellung der letzten Schicht komplett fertig (auch beschichtet) aus dem Werkzeug entnommen werden können, ohne dass ein nachträgliches Bedrucken notwendig ist.

Jedoch müsste das Label nicht unbedingt an der Oberfläche angebracht werden, so wäre es auch möglich, beispielsweise auf der rechten Seite der Substratschicht 224 (Fig. 13a) ein Label (auch in Form eines Hologramms) spiegelbildlich verkehrt aufzudrucken und das Substrat 224 selbst transparent auszubilden. Auf das aufgedruckte Label würde dann, wie vorgenannt beschrieben, die weiteren Schichten 226' sowie die Deckschicht angeordnet werden. In diesem Fall würde ein Effekt wie bei einer Hinterglasmalerei erreicht werden, wobei das Label durch das transparente Substrat hindurch scheint. Auch bei dieser Vorgehensweise würde ein späteres Bedrucken entfallen.

Insgesamt kann man mit der Flutungs- oder Überflutungstechnik, wobei Schichten in einer Kavität mit bestimmter Dicke überflutet werden oder dünne Schichten gesondert ausgebildet und dann in einer Kavität verklebt werden, in hervorragender Weise alle gängigen optischen Datenträger und auch zukünftige optische Datenträger in hervorragender Qualität herstellen. Teilweise können bisher notwendige Zusatzschritte (Sputtern) entfallen, so dass eine Kosteneinsparung durch Verzicht auf Nachfolgeeinrichtungen und zum Teil auch eine Produktionseffizienzerhöhung ohne weiteres möglich ist.

Insgesamt bietet die vorliegende Erfindung eine Vielzahl von Möglichkeiten bei der Herstellung von bisher bekannten und neuen Datenträgern.

**Tabelle 1**

| | |
|---|---|
| 10 | Laserdiode |
| 12 | Linse |
| 14 | Polarisationsfilter |
| 16 | I/4-Platte |
| 18 | Linse |
| 20 | Optischer Datenträger |
| 22 | Linse |
| 24 | Photodiode |
| 26 | Datenbereich |
| 28 | Kein Datenbereich |
| 30 | Zentrische Bohrung |
| 32 | Schicht aus Polycarbonat |
| 34 | Kleberschicht |
| 36 | Aluminium |
| 38 | "land" |
| 40 | "pit" |
| 42 | Abstand der Pit-Spur |
| 50 | Substrat |
| 52 | Informationsschicht |
| 54 | Lichtdurchlässige Schicht und Schutzschicht |
| 56 | minimale Pit-Länge bei einer DVD (0,4 mm) |
| 58 | Spurabstand bei einer DVD (0,74 mm) |
| 60 | Minimale Pitlänge bei einer BluRay (0,15 mm) |
| 62 | Spurabstand bei einer BluRay (0,32 mm) |
| | |
| 70, 70' , 70" | Lichtdurchlässige Deckschicht |
| 72, 72' , 72" | Informationsschicht |
| 74, 74' , 74" | Substrat |
| | |
| 100 | Lichtdurchlässige Substratschicht |
| 102 | Reflexions-Schicht |
| 104 | Deckschicht (z.B. bedruckt) |
| | |
| 108 | Substratschicht |
| 110 | Lichtdurchlässige Schicht |
| 112 | Reflexionsschicht |
| 114 | Kleberschicht |
| | |
| 118 | Substratschicht |
| 120 | Lichtdurchlässige Schicht |
| 122 | Erste Reflexionsschicht |
| 124 | Zweite Reflexionsschicht |
| 126 | Kleberschicht |
| | |
| 130 | Substratschicht |
| 132 | Reflexionsschicht |
| 134 | Lichtdurchlässige Deckschicht |
| | |
| 140 | Substratschicht |
| 142 | Erste Reflexionsschicht |
| 144 | Lichtdurchlässige Deckschicht |
| 146 | Zweite Reflexionsschicht |
| 148 | Kleberschicht |
| | |
| 150 | Substratschicht |
| 152 | Informationsträgerschicht (aus reflektierendem PUR) |
| 154 | Lichtdurchlässige Deckschicht (aus lichtdurchlässigem PUR) |
| | |
| 160 | Basisschicht |
| 162 | Zwischenschicht 1 |
| 164 | Zwischenschicht 2 |
| 166 | Zwischenschicht 3 |
| 168 | Deckschicht |
| | |
| 170 | Substrat |
| 172 | Theoretisch gewollte Reflexionsschicht |
| 174 | Praktisch erreichte Reflexionsschicht |
| 176 | Lichtdurchlässige Deckschicht |
| | |
| 180 | Reflektierendes Substrat |
| 182 | Lichtdurchlässige Deckschicht |
| | |
| 200 | Erste Formwerkzeughälfte |
| 202 | Zweite Formwerkzeughälfte |
| | |
| 206 | Substratschicht |
| 208 | Master-Matrize |
| 210 | Transparente Oberflächenschicht |
| | |
| 220 | Erste Formwerkzeughälfte |
| 222 | Zweite Formwerkzeughälfte |
| 224 | Dummy-Schicht |
| 226 | Dünner Kavitätsspalt |
| 226' | Informationsschicht |
| 228 | Matrize |
| 228' | Pit-Struktur |
| 230 | Dritte Formwerkzeughälfte |
| 232 | Dünner Kavitätsspalt |
| | |
| 250 | Erste Formwerkzeughälfte |
| 252 | Zweite Formwerkzeughälfte |
| 254 | Substratschicht |
| 256 | Erste Matrize |
| 258 | Dritte Formwerkzeughälfte |
| 260 | Vierte Formwerkzeughälfte |
| 262 | Informationsschicht |
| 264 | Zweite Matrize |
| 270 | Fünfte Formwerkzeughälfte |
| 271 | Sechste Formwerkzeughälfte |
| 272 | Teilreflektierende Kleberschicht |
| | |
| 300 | Wendeplatten-Schließeinheit |
| 302 | Wendeplatten-WürFel |
| 304 | Erste Formwerkzeughälften (jeweils identisch) |
| 306 | Zweite Formwerkzeughälfte |
| 307 | Dritte Formwerkzeughälfte |
| 308 | Vierte Formwerkzeughälfte |
| 309 | Erste Aufspannplatte |
| 310 | Zweite Aufspannplatte |
| 311 | Dritte Aufspannplatte |
| 312 | Robotarm |
| | |

## Patentansprüche

1. Verfahren zur Herstellung eines optischen Datenträgers (20) zur Speicherung von Information, bei dem zumindest eine Informationsschicht (52, 72', 72", 110, 118, 120, 144, 160, 162, 164, 166, 226', 254) mit einer zumindest teilweise reflektierenden Schicht (72, 102, 112, 122, 124, 152, 172, 174) vorgesehen ist, wobei die Informationen in einer Informationsschicht (52, 72', 72", 110, 118, 120, 144, 160, 162, 164, 166, 226', 254) durch eine abwechselnde Folge von "pits/grooves" (40) und "lands" (38) enthalten sind, und wobei vorzugsweise auf zumindest einer Informationsschicht (52, 72', 72", 110, 118, 120, 144, 160, 162, 164, 166, 226', 254) eine lichtdurchlässige Deckschicht (114, 118, 120) aufgebracht ist,
**dadurch gekennzeichnet,**
**dass** ein in einer Kavität angeordneter Bestandteil eines optischen Datenträgers (20) unter Ausbildung einer Informationsschicht (52, 72', 72", 110, 118, 120, 144, 160, 162, 164, 166, 226', 254) und/oder Deckschicht (114, 118, 120) mit einem gegenüber der Viskosität von Polycarbonat niedriger viskosen, aushärtbaren Material überflutet wird.

2. Verfahren nach Anspruch 1,
**dadurch gekennzeichnet,**
**dass** der in der Kavität angeordnete Bestandteil eine Trägerschicht (74") oder eine Informationsschicht (52, 72', 72", 110, 118, 120, 144, 160, 162, 164, 166, 226', 254) oder eine Kombination von Trägerschichten (74") und
Informationsschichten (52, 72', 72", 110, 118, 120, 144, 160, 162, 164, 166, 226', 254) oder eine Kombination verschiedener Informationsschichten (52, 72', 72", 110, 118, 120, 144, 160, 162, 164, 166, 226', 254) ist.

3. Verfahren nach Anspruch 1,
**dadurch gekennzeichnet,**
**dass** zunächst eine Trägerschicht (74") oder eine Informationsschicht (52, 72', 72", 110, 118, 120, 144, 160, 162, 164, 166, 226', 254) gebildet wird, dass die Trägerschicht (74") oder die Informationsschicht (52, 72', 72", 110, 118, 120, 144, 160, 162, 164, 166, 226', 254) in einer ersten Kavität unter Ausbildung eines Spaltes an zumindest einer Seite der Trägerschicht (74") oder der Informationsschicht (52, 72', 72", 110, 118, 120, 144, 160, 162, 164, 166, 226', 254) positioniert wird, und dass die Trägerschicht (74") oder die Informationsschicht (52, 72', 72", 110, 118, 120, 144, 160, 162, 164, 166, 226', 254) durch Einbringen eines gegenüber der Viskosität von Polycarbonat niedriger viskosen Materials in den Spalt der zweiten Kavität überflutet wird.

4. Verfahren nach einem der Ansprüche 2 oder 3,
**dadurch gekennzeichnet,**
**dass** die Trägerschicht (74") oder die Informationsschicht (52, 72', 72", 110, 118, 120, 144, 160, 162, 164, 166, 226', 254) vor dem Überfluten in einer weiteren Kavität eines zweiten Werkzeugs gebildet wird, und dass die Trägerschicht (74") oder die Informationsschicht (52, 72', 72", 110, 118, 120, 144, 160, 162, 164, 166, 226', 254) vor dem Positionieren in der ersten Kavität aus der weiteren Kavität zumindest teilweise entformt wird.

5. Verfahren nach Anspruch 4,
**dadurch gekennzeichnet,**
**dass** die Schritte des zumindest teilweise Entformens, Anordnens des bisher gebildeten Produktes in einer Kavität unter Ausbildung eines Spaltes und Überfluten mit einem gegenüber der Viskosität von Polycarbonat niedriger viskosen Material zumindest einmal wiederholt wird, derart, dass mehrere Schichten gebildet werden.

6. Verfahren nach einem der Ansprüche 2 bis 5,
**dadurch gekennzeichnet,**
**dass** bei der Bildung der Kavitäten auf der der Trägerschicht (74") oder der Informationsschicht (52, 72', 72", 110, 118, 120, 144, 160, 162, 164, 166, 226', 254) gegenüberliegenden Seite des Spaltes eine Information aufweisende Matrize (208, 228, 256) angeordnet wird, so dass durch Einbringen des gegenüber der Viskosität von Polycarbonat niedriger viskosen Materials eine Informationsschicht (52, 72', 72", 110, 118, 120, 144, 160, 162, 164, 166, 226', 254) ausgebildet wird.

7. Verfahren nach einem der Ansprüche 2 bis 6,
**dadurch gekennzeichnet,**
**dass** als Informationsschicht (52, 72', 72", 110, 118, 120, 144, 160, 162, 164, 166, 226', 254) oder Deckschicht (114, 118, 120) ein Material gewählt wird, welches nach dem Aushärten optisch transparent, reflektierend oder teilreflektierend vorliegt.

8. Verfahren nach einem der Ansprüche 2 bis 7,
**dadurch gekennzeichnet,**
**dass** der in der Kavität gebildete Spalt gegenüber der Umgebung abgedichtet wird, derart, dass das zur Überflutung eingeleitete Material nicht an die Umgebung austreten kann.

9. Verfahren nach einem der Ansprüche 2 bis 8,
**dadurch gekennzeichnet,**
**dass** vor dem Überfluten die die Information aufweisende Oberfläche einer Informationsschicht (52, 72', 72", 110, 118, 120, 144, 160, 162, 164, 166, 226', 254) mit einer dünnen voll oder teilweise reflektierenden Reflexionsschicht (72, 102, 112, 122, 124, 152, 172, 174) beschichtet wird.

10. Verfahren nach einem der Ansprüche 2 bis 9,
**dadurch gekennzeichnet,**
**dass** zumindest eine der Schichten aus Trägerschicht (74"), Informationsschicht (52, 72', 72", 110, 118, 120, 144, 160, 162, 164, 166, 226', 254) oder Zwischenschicht farbig ausgestaltet, insbesondere durchgefärbt, vorzugsweise mit Farbpigmenten versehen ist.

11. Verfahren nach einem der Ansprüche 2 bis 10,
**dadurch gekennzeichnet,**
**dass** zwischen zumindest zwei Schichten aus Trägerschicht (74"), Informationsschicht (52, 72', 72", 110, 118, 120, 144, 160, 162, 164, 166, 226', 254) oder Deckschicht (114, 118, 120) eine Farbstoffschicht für einen beschreibbaren optischen Datenträger (20) aufgebracht wird.

12. Verfahren nach einem der Ansprüche 2 bis 11,
**dadurch gekennzeichnet,**
**dass** vor dem Zusammenfügen zweier Schichten oder vor dem Aufbringen einer Schicht auf eine andere Schicht eine Beschichtung durch Sputtern durchgeführt wird.

13. Verfahren nach einem der Ansprüche 2 bis 12,
**dadurch gekennzeichnet,**
**dass** die in der späteren Durchstrahlrichtung oberste Deckschicht (114, 118, 120) aus einem lichtdurchlässigen Material, insbesondere einem Polyurethanmaterial gebildet wird.

14. Verfahren nach einem der Ansprüche 2 bis 13,
**dadurch gekennzeichnet,**
**dass** vor der Bildung der Trägerschicht (74") oder der ersten Informationsschicht (52, 72', 72", 110, 118, 120, 144, 160, 162, 164, 166, 226', 254) ein Label in die erste Kavität eingelegt wird und anschließend das Material für die Trägerschicht (74") oder die Informationsschicht (52, 72', 72", 110, 118, 120, 144, 160, 162, 164, 166, 226', 254) in die erste Kavität eingefüllt wird.

15. Verfahren nach einem der Ansprüche 2 bis 14,
**dadurch gekennzeichnet,**
**dass** eine transparente Trägerschicht (74") oder Informationsschicht (52, 72', 72", 110, 118, 120, 144, 160, 162, 164, 166, 226', 254) auf einer Seite mit einem Druck oder einem Label versehen wird und dass auf dieser Seite anschließend eine zumindest weitere Schicht, insbesondere eine Informationsschicht (52, 72', 72", 110, 118, 120, 144, 160, 162, 164, 166, 226', 254), angeordnet wird.

16. Verfahren nach einem der Ansprüche 2 bis 16,
**dadurch gekennzeichnet,**
**dass** die Deckschicht (114, 118, 120) oder eine Informationsschicht (52, 72', 72", 110, 118, 120, 144, 160, 162, 164, 166, 226', 254) kleiner als 0,4 mm, insbesondere kleiner als 0,3 mm, vorzugsweise kleiner als 0,2 mm ist.

17. Verfahren nach einem der vorhergehenden Ansprüche,
**dadurch gekennzeichnet,**
**dass** ein gegenüber der Viskosität von Polycarbonat niedriger viskoses Material zum Überfluten verwendet wird, welches nach dem Aushärten transparent, teilreflektierend, vollreflektierend oder farbig transparent ist.

18. Verfahren nach einem der vorhergehenden Ansprüche,
**dadurch gekennzeichnet,**
**dass** das niedriger viskose Material ein Polyurethanmaterial, ein UV-aushärtbares Material, ein Klarlack, ein Acryllack oder ein ein Lösungsmittel aufweisendes Material ist.

19. Vorrichtung zur Herstellung eines optischen Datenträgers (20) gemäß einem in den Ansprüchen 1 bis 18 genannten Verfahren, umfassend ein Werkzeug (200, 202, 220, 222, 250, 252) mit einer ersten Kavität, in der ein scheibenförmiger Bestandteil des optischen Datenträgers (20) unter Ausbildung eines dünnen scheibenförmigen Hohlraums einbringbar oder anordenbar ist, und eine Einfülleinheit, mit der ein aushärtbares, im ausgehärteten Zustand transparentes und vor dem Aushärten gegenüber der Viskosität von Polycarbonat niedriger viskoses Material in den Hohlraum mittels Fluten einfüllbar ist und dabei den scheibenförmigen Bestandteil überflutet.

20. Vorrichtung nach Anspruch 19,
**dadurch gekennzeichnet,**
**dass** zur Ausbildung des scheibenförmigen Bestandteils ein weiteres Formwerkzeug (200, 204, 220, 230, 258, 260, 270, 271) mit einer zweiten Kavität vorgesehen ist, in das ein aushärtbares Material einbringbar ist.

21. Vorrichtung nach Anspruch 19 oder 20,
**dadurch gekennzeichnet,**
**dass** in der ersten und/oder in der zweiten Kavität eine Matrize (208, 228, 256) vorgesehen ist, welche die auf dem optischen Datenträger (20) speicherbare Information aufweist, die sich beim Einbringen des Materials in die jeweilige Kavität in der Oberfläche abbildet.

22. Vorrichtung nach einem der Ansprüche 20 oder 21,
**dadurch gekennzeichnet,**
**dass** das Formwerkzeug derart ausgebildet ist, dass der darin gebildete Kavitätsspalt benachbart eines scheibenförmigen Bestandteils eines optischen Datenträgers (20) oder zwischen zwei in der Kavität aufgenommenen Bestandteilen eines optischen Datenträgers (20) eine Dicke von weniger als 0,5 mm, insbesondere weniger als 0,3 mm, vorzugsweise weniger als 0,2 mm aufweist.

23. Vorrichtung nach einem der Ansprüche 19 bis 22,
**dadurch gekennzeichnet,**
**dass** eine Schließeinrichtung vorgesehen ist, in der zumindest zwei Formwerkzeuge zur Ausbildung von zumindest zwei verschiedenen Schichten des optischen Datenträgers (20) vorgesehen sind und dass die beiden Formwerkzeuge zyklusweise befüllbar sind.

24. Vorrichtung nach einem der Ansprüche 19 bis 23,
**dadurch gekennzeichnet,**
**dass** der Kavitätsraum gegenüber der Außenumgebung abgedichtet ist.

25. Vorrichtung nach einem der Ansprüche 19 bis 24,
**dadurch gekennzeichnet,**
**dass** eine Vorrichtung zum Beschichten einer Trägerschicht (74") oder einer Informationsschicht (52, 72', 72", 110, 118, 120, 144, 160, 162, 164, 166, 226', 254) mit einer teil- oder vollreflektierenden Schicht (72, 102, 112, 122, 124, 152, 172, 174) vorgesehen ist.

26. Vorrichtung nach einem der Ansprüche 19 bis 25,
**dadurch gekennzeichnet,**
**dass** eine Vorrichtung zum Beschichten einer Trägerschicht (74") oder einer Informationsschicht (52, 72', 72", 110, 118, 120, 144, 160, 162, 164, 166, 226', 254) mit einer Farbschicht vorgesehen ist, in der später eine Information einbringbar ist.

## Claims

1. Method for producing an optical data carrier (20) for storing information, in which provision is made of at least one information layer (52, 72', 72", 110, 118, 120, 144, 160, 162, 164, 166, 226', 254) with an at least partly reflective layer (72, 102, 112, 122, 124, 152, 172, 174), the information being contained in an information layer (52, 72', 72", 110, 118, 120, 144, 160, 162, 164, 166, 226', 254) by means of an alternating sequence of "pits/grooves" (40) and "lands" (38), and a light-transmissive covering layer (114, 118, 120) preferably being applied on at least one information layer (52, 72', 72", 110, 118, 120, 144, 160, 162, 164, 166, 226', 254),
**characterized**
**in that** a component part of an optical data carrier (20) which is arranged in a cavity is flooded with a curable material having a lower viscosity than the viscosity of polycarbonate, with formation of an information layer (52, 72', 72", 110, 118, 120, 144, 160, 162, 164, 166, 226', 254) and/or covering layer (114, 118, 120).

2. Method according to Claim 1,
**characterized**
**in that** the component part which is arranged in the cavity is a carrier layer (74") or an information layer (52, 72', 72", 110, 118, 120, 144, 160, 162, 164, 166, 226', 254) or a combination of carrier layers (74") and information layers (52, 72', 72", 110, 118, 120, 144, 160, 162, 164, 166, 226', 254) or a combination of different information layers (52, 72', 72", 110, 118, 120, 144, 160, 162, 164, 166, 226', 254).

3. Method according to Claim 1,
**characterized**
**in that** firstly a carrier layer (74") or an information layer (52, 72', 72", 110, 118, 120, 144, 160, 162, 164, 166, 226', 254) is formed, in that the carrier layer (74") or the information layer (52, 72', 72", 110, 118, 120, 144, 160, 162, 164, 166, 226', 254) is positioned in a first cavity with formation of a gap at at least one side of the carrier layer (74") or the information layer (52, 72', 72", 110, 118, 120, 144, 160, 162, 164, 166, 226', 254), and in that the carrier layer (74") or the information layer (52, 72', 72", 110, 118, 120, 144, 160, 162, 164, 166, 226', 254) is flooded by introducing a material having a lower viscosity than the viscosity of polycarbonate into the gap in the second cavity.

4. Method according to either of Claims 2 and 3,
**characterized**
**in that** the carrier layer (74") or the information layer (52, 72', 72", 110, 118, 120, 144, 160, 162, 164, 166, 226', 254) is formed prior to the flooding in a further cavity of a second mould, and in that the carrier layer (74") or the information layer (52, 72', 72", 110, 118, 120, 144, 160, 162, 164, 166, 226', 254) is at least partly released from the further mould cavity prior to the positioning in the first cavity.

5. Method according to Claim 4,
**characterized**
**in that** the steps of at least partial release from the mould, arranging the previously formed product in a cavity with formation of a gap and flooding with a material having a lower viscosity than the viscosity of polycarbonate are repeated at least once, in such a way that a plurality of layers are formed.

6. Method according to any of Claims 2 to 5,
**characterized**
**in that** a die (208, 228, 256) having information is arranged during the formation of the cavities on the opposite side of the gap with respect to the carrier layer (74") or the information layer (52, 72', 72", 110, 118, 120, 144, 160, 162, 164, 166, 226', 254), with the result that an information layer (52, 72', 72", 110, 118, 120, 144, 160, 162, 164, 166, 226', 254) is formed by introducing the material having a lower viscosity than the viscosity of polycarbonate.

7. Method according to any of Claims 2 to 6,
**characterized**
**in that** a material which is present in optically transparent, reflective or partly reflective fashion after curing is chosen as information layer (52, 72', 72", 110, 118, 120, 144, 160, 162, 164, 166, 226', 254) or covering layer (114, 118, 120).

8. Method according to any of Claims 2 to 7,
**characterized**
**in that** the gap formed in the cavity is sealed relative to the surroundings, in such a way that the material introduced for the flooding cannot escape to the surroundings.

9. Method according to any of Claims 2 to 8,
**characterized**
**in that** prior to the flooding, that surface of an information layer (52, 72', 72", 110, 118, 120, 144, 160, 162, 164, 166, 226', 254) which has the information is coated with a thin, fully or partly reflective reflection layer (72, 102, 112, 122, 124, 152, 172, 174).

10. Method according to any of Claims 2 to 9,
**characterized**
**in that** at least one of the layers from carrier layer (74"), information layer (52, 72', 72", 110, 118, 120, 144, 160, 162, 164, 166, 226', 254) or interlayer is configured to be coloured, in particular is coloured through, and is preferably provided with colour pigments.

11. Method according to any of Claims 2 to 10,
**characterized**
**in that** a colorant layer for a writable optical data carrier (20) is applied between at least two layers from carrier layer (74"), information layer (52, 72', 72", 110, 118, 120, 144, 160, 162, 164, 166, 226', 254) or covering layer (114, 118, 120).

12. Method according to any of Claims 2 to 11,
**characterized**
**in that** a coating is carried out by sputtering prior to joining together two layers or prior to applying one layer to another layer.

13. Method according to any of Claims 2 to 12,
**characterized**
**in that** the topmost covering layer (114, 118, 120) in the subsequent through-radiating direction is formed from a light-transmissive material, in particular a polyurethane material.

14. Method according to any of Claims 2 to 13,
**characterized**
**in that** prior to the formation of the carrier layer (74") or the first information layer (52, 72', 72", 110, 118, 120, 144, 160, 162, 164, 166, 226', 254), a label is inserted into the first cavity and the material for the carrier layer (74") or the information layer (52, 72', 72", 110, 118, 120, 144, 160, 162, 164, 166, 226', 254) is subsequently filled into the first cavity.

15. Method according to any of Claims 2 to 14,
**characterized**
**in that** a transparent carrier layer (74") or information layer (52, 72', 72", 110, 118, 120, 144, 160, 162, 164, 166, 226', 254) is provided with a print or a label on one side, and in that an at least further layer, in particular an information layer (52, 72', 72", 110, 118, 120, 144, 160, 162, 164, 166, 226', 254), is subsequently arranged on said side.

16. Method according to any of Claims 2 to 16,
**characterized**
**in that** the covering layer (114, 118, 120) or an information layer (52, 72', 72", 110, 118, 120, 144, 160, 162, 164, 166, 226', 254) is smaller than 0.4 mm, in particular smaller than 0.3 mm, preferably smaller than 0.2 mm.

17. Method according to any of the preceding claims,
**characterized**
**in that** a material having a lower viscosity than the viscosity of polycarbonate is used for the flooding which is transparent, partly reflective, fully reflective or coloured-transparent after curing.

18. Method according to any of the preceding claims,
**characterized**
**in that** the material having a lower viscosity is a polyurethane material, a UV-curable material, a clear lacquer, an acrylic lacquer or a material comprising a solvent.

19. Apparatus for producing an optical data carrier (20) in accordance with a method mentioned in Claims 1 to 18, comprising a mould (200, 202, 220, 222, 250, 252) having a first cavity, in which a disk-shaped component part of the optical data carrier (20) can be introduced or arranged with formation of a thin disk-shaped hollow space, and a filling unit, by which a curable material which is transparent in the cured state and has a lower viscosity than the viscosity of polycarbonate prior to curing can be filled into the hollow space by means of flooding and floods the disk-shaped component part in the process.

20. Apparatus according to Claim 19,
**characterized**
**in that** a further mould (200, 204, 220, 230, 258, 260, 270, 271) having a second cavity is provided for forming the disk-shaped component part, into which further mould a curable material can be introduced.

21. Apparatus according to Claim 19 or 20,
**characterized**
**in that** a die (208, 228, 256) is provided in the first and/or in the second cavity, said die having the information which can be stored on the optical data carrier (20) and which is reproduced in the surface when the material is introduced into the respective cavity.

22. Apparatus according to either of Claims 20 and 21,
**characterized**
**in that** the mould is embodied in such a way that the cavity gap formed therein, adjacent to a disk-shaped component part of an optical data carrier (20) or between two component parts of an optical data carrier (20) that are accommodated in the cavity, has a thickness of less than 0.5 mm, in particular less than 0.3 mm, preferably less than 0.2 mm.

23. Apparatus according to any of Claims 19 to 22,
**characterized**
**in that** a clamping device is provided, in which at least two moulds for forming at least two different layers of the optical data carrier (20) are provided, and in that the two moulds can be filled cyclically.

24. Apparatus according to any of Claims 19 to 23,
**characterized**
**in that** the cavity space is sealed relative to the external surroundings.

25. Apparatus according to any of Claims 19 to 24,
**characterized**
**in that** provision is made of an apparatus for coating a carrier layer (74") or an information layer (52, 72', 72", 110, 118, 120, 144, 160, 162, 164, 166, 226', 254) with a partly or fully reflective layer (72, 102, 112, 122, 124, 152, 172, 174).

26. Apparatus according to any of Claims 19 to 25,
**characterized**
**in that** provision is made of an apparatus for coating a carrier layer (74") or an information layer (52, 72', 72", 110, 118, 120, 144, 160, 162, 164, 166, 226', 254) with a colour layer in which information can subsequently introduced.

## Revendications

1. Procédé pour produire un support de données optique (20) pour l'enregistrement d'informations, dans lequel au moins une couche d'informations (52, 72', 72", 110, 118, 120, 144, 160, 162, 164, 166, 226', 254) dotée d'au moins une couche partiellement réfléchissante (72, 102, 112, 122, 124, 152, 172, 174) est prévue, où les informations sont contenues dans une couche d'informations (52, 72', 72", 110, 118, 120, 144, 160, 162, 164, 166, 226', 254) via une séquence alternativement de « creux/sillons » (40) et de « méplats » (38), et où de préférence une couche de revêtement translucide (114, 118, 120) se trouve sur au moins une couche d'informations (52, 72', 72", 110, 118, 120, 144, 160, 162, 164, 166, 226', 254),
**caractérisé en ce**
**qu'**un élément, disposé dans une cavité, d'un support de données optique (20) formant une couche d'informations (52, 72', 72", 110, 118, 120, 144, 160, 162, 164, 166, 226', 254) et/ou une couche de revêtement (114, 118, 120) est inondé d'une substance durcissable et faiblement visqueuse par rapport à la viscosité du polycarbonate.

2. Procédé selon la revendication 1,
**caractérisé en ce**
**que** l'élément disposé dans la cavité constitue une couche support (74") ou une couche d'informations (52, 72', 72", 110, 118, 120, 144, 160, 162, 164, 166, 226', 254) ou une combinaison de couches support (74") et de couches d'informations (52, 72', 72", 110, 118, 120, 144, 160, 162, 164, 166, 226', 254) ou une combinaison de différentes couches d'informations (52, 72', 72", 110, 118, 120, 144, 160, 162, 164, 166, 226', 254).

3. Procédé selon la revendication 1,
**caractérisé en ce**
**que** tout d'abord une couche support (74") ou une couche d'informations (52, 72', 72", 110, 118, 120, 144, 160, 162, 164, 166, 226', 254) est formée, que la couche support (74") ou la couche d'informations (52, 72', 72", 110, 118, 120, 144, 160, 162, 164, 166, 226', 254) est positionnée dans une première cavité formant une fente au niveau d'au moins un côté de la couche support (74") ou de la couche d'informations (52, 72', 72", 110, 118, 120, 144, 160, 162, 164, 166, 226', 254), et que la couche support (74") ou la couche d'informations (52, 72', 72", 110, 118, 120, 144, 160, 162, 164, 166, 226', 254) est inondée d'une substance faiblement visqueuse par rapport à la viscosité du polycarbonate dans la fente de la deuxième cavité.

4. Procédé selon une des revendications 2 ou 3,
**caractérisé en ce**
**que** la couche support (74") ou la couche d'informations (52, 72', 72", 110, 118, 120, 144, 160, 162, 164, 166, 226', 254) est formée dans une autre cavité d'un deuxième outil avant l'inondation, et que la couche support (74") ou la couche d'informations (52, 72', 72", 110, 118, 120, 144, 160, 162, 164, 166, 226', 254) est extraite au moins partiellement de l'autre cavité avant le positionnement dans la première cavité.

5. Procédé selon la revendication 4,
**caractérisé en ce**
**que** les étapes d'extraction au moins partielle, de disposition du produit jusqu'ici formé dans une cavité formant une fente et d'inondation d'une substance faiblement visqueuse par rapport à la viscosité du polycarbonate sont répétées au moins une fois, de telle manière que plusieurs couches soient formées.

6. Procédé selon une des revendications 2 à 5,
**caractérisé en ce**
**que** lors de la formation des cavités sur le côté de la fente faisant face à la couche support (74") ou à la couche d'informations (52, 72', 72", 110, 118, 120, 144, 160, 162, 164, 166, 226', 254), une matrice (208, 228, 256) contenant des informations est agencée, de telle manière qu'une couche d'informations (52, 72', 72", 110, 118, 120, 144, 160, 162, 164, 166, 226', 254) se forme lors du dépôt de la substance faiblement visqueuse par rapport à la viscosité du polycarbonate.

7. Procédé selon une des revendications 2 à 6,
**caractérisé en ce**
**qu'**une substance est choisie en tant que couche d'informations (52, 72', 72", 110, 118, 120, 144, 160, 162, 164, 166, 226', 254) ou couche de revêtement (114, 118, 120), laquelle substance est transparente, réfléchissante ou partiellement réfléchissante après le durcissement.

8. Procédé selon une des revendications 2 à 7,
**caractérisé en ce**
**que** la zone environnant la fente formée dans la cavité est isolée, de telle manière que la substance déposée pour l'inondation ne puisse pas s'écouler au niveau de cette zone.

9. Procédé selon une des revendications 2 à 8,
**caractérisé en ce**
**qu'**avant l'inondation, la surface contenant les informations d'une couche d'informations (52, 72', 72", 110, 118, 120, 144, 160, 162, 164, 166, 226', 254) est recouverte d'une mince couche de réflexion (72, 102, 112, 122, 124, 152, 172, 174) totalement ou partiellement réfléchissante.

10. Procédé selon une des revendications 2 à 9,
**caractérisé en ce**
**qu'**il est prévu qu'au moins une des couches parmi la couche support (74''), la couche d'informations (52, 72', 72", 110, 118, 120, 144, 160, 162, 164, 166, 226', 254) ou la couche intermédiaire est colorisée, en particulier imprégnée de couleur, de préférence avec des pigments de couleurs.

11. Procédé selon une des revendications 2 à 10,
**caractérisé en ce**
**qu'**entre au moins deux couches parmi la couche support (74"), la couche d'informations (52, 72', 72", 110, 118, 120, 144, 160, 162, 164, 166, 226', 254) ou la couche de revêtement (114, 118, 120), une couche de colorant est appliquée pour un support de données optique inscriptible.

12. Procédé selon une des revendications 2 à 11,
**caractérisé en ce**
**qu'**avant l'assemblage des deux couches ou avant l'application d'une couche sur une autre couche, une application par pulvérisations est réalisée.

13. Procédé selon une des revendications 2 à 12,
**caractérisé en ce**
**que** la couche de revêtement (114, 118, 120) supérieure dans la direction de propagation ultérieure est constituée d'une substance translucide, en particulier d'une substance en polyuréthane.

14. Procédé selon une des revendications 2 à 13,
**caractérisé en ce**
**qu'**avant la formation de la couche support (74") ou de la première couche d'informations (52, 72', 72", 110, 118, 120, 144, 160, 162, 164, 166, 226', 254), une étiquette est introduite dans la première cavité, puis la substance pour la couche support (74") ou la couche d'informations (52, 72', 72", 110, 118, 120, 144, 160, 162, 164, 166, 226', 254) est versée dans la première cavité.

15. Procédé selon une des revendications 2 à 14,
**caractérisé en ce**
**qu'**une couche support (74") ou une couche d'informations (52, 72', 72", 110, 118, 120, 144, 160, 162, 164, 166, 226', 254) transparente est prévue sur un côté possédant une impression ou une étiquette et qu'au moins une couche supplémentaire est ensuite disposée sur ce côté, en particulier une couche d'informations (52, 72', 72", 110, 118, 120, 144, 160, 162, 164, 166, 226', 254).

16. Procédé selon une des revendications 2 à 16,
**caractérisé en ce**
**que** la couche de revêtement (114, 118, 120) ou une couche d'informations (52, 72', 72", 110, 118, 120, 144, 160, 162, 164, 166, 226', 254) est inférieure à 0,4 mm, en particulier inférieure à 0,3 mm, de préférence inférieure à 0,2 mm.

17. Procédé selon une des revendications précédentes,
**caractérisé en ce**
**qu'**une substance faiblement visqueuse par rapport à la viscosité du polycarbonate est utilisée pour l'inondation, laquelle substance est transparente, partiellement réfléchissante, totalement réfléchissante ou transparente en couleur après le durcissement.

18. Procédé selon une des revendications précédentes,
**caractérisé en ce**
**que** la substance faiblement visqueuse est une substance en polyuréthane, une substance durcissable aux UV, un vernis, un vernis acrylique ou une substance contenant un solvant.

19. Dispositif pour produire un support de données optique (20) conformément à l'un des procédés mentionnés dans les revendications 1 à 18, comprenant un outil (200, 202, 220, 222, 250, 252) doté d'une première cavité, dans laquelle un élément en forme de disque du support de données optique (20) formant un creux mince en forme de disque peut être introduit ou disposé, et une unité de remplissage, avec laquelle une substance faiblement visqueuse par rapport à la viscosité du polycarbonate, durcissable et transparente une fois durcie, peut être versée dans le creux au moyen d'un remplissage, inondant ainsi l'élément en forme de disque.

20. Dispositif selon la revendication 19,
**caractérisé en ce**
**que** pour la formation de l'élément en forme de disque, un outil de formage supplémentaire (200, 204, 220, 230, 258, 260, 270, 271) doté d'une deuxième cavité est prévu, dans lequel une substance durcissable peut être introduite.

21. Dispositif selon la revendication 19 ou 20,
**caractérisé en ce**
**que** dans la première et/ou dans la deuxième cavité, une matrice (208, 228, 256) est prévue, laquelle contient l'information enregistrable sur le support de données optique (20), laquelle information se forme lors de l'introduction de la substance dans la cavité correspondante de la surface.

22. Dispositif selon une des revendications 20 ou 21,
**caractérisé en ce**
**que** l'outil de formage est formé de telle manière que la fente de cavité formée à l'intérieur et avoisinant un élément en forme de disque d'un support de données optique (20) ou située entre deux éléments, hébergés dans la cavité, d'un support de données optique (20), présente une épaisseur inférieure à 0,5 mm, en particulier inférieure à 0,3 mm, de préférence inférieure à 0,2 mm.

23. Dispositif selon une des revendications 19 à 22,
**caractérisé en ce**
**qu'**un dispositif de fermeture est prévu, dans lequel au moins deux outils de formage sont prévus pour la formation d'au moins deux couches différentes du support de données optique (20) et
**que** les deux outils de formage peuvent être remplis de manière cyclique.

24. Dispositif selon une des revendications 19 à 23,
**caractérisé en ce**
**que** la zone environnante de la cavité est isolée.

25. Dispositif selon une des revendications 19 à 24,
**caractérisé en ce**
**qu'**un dispositif est prévu pour le recouvrement d'une couche support (74") ou d'une couche d'informations (52, 72', 72", 110, 118, 120, 144, 160, 162, 164, 166, 226', 254) avec une couche partiellement ou totalement réfléchissante.

26. Dispositif selon une des revendications 19 à 25,
**caractérisé en ce**
**qu'**un dispositif est prévu pour le recouvrement d'une couche support (74") ou d'une couche d'informations (52, 72', 72", 110, 118, 120, 144, 160, 162, 164, 166, 226', 254) avec une couche de couleur, dans laquelle une information peut être introduite ultérieurement.
